# EUROPEAN PATENT APPLICATION

(11) **EP 4 746 254 A1**
(43) Date of publication of application: **20.05.2026**
(21) Application number: 24928044.7
(22) Date of filing: 04.09.2024
(51) Int. Cl.: H02K 1/28, H02K 1/2793, H02K 1/30

(54) **ROTOR OF AXIAL FLUX MOTOR, AND AXIAL FLUX MOTOR**

(30) Priority: 06.03.2024 CN 202410254555; 06.03.2024 CN 202410254552; 06.03.2024 CN 202410254549; 06.03.2024 CN 202410254559
(71) Applicant: Zhejiang Pangood Power Technology Co., Ltd., Jinhua, Zhejiang 321000 (CN)
(72) Inventor: WANG, Zhihui, Jinhua, Zhejiang 321000 (CN); HUANG, Xin, Jinhua, Zhejiang 321000 (CN); CUI, Haojie, Jinhua, Zhejiang 321000 (CN); LIANG, Yusheng, Jinhua, Zhejiang 321000 (CN); HOU, Mingjun, Jinhua, Zhejiang 321000 (CN); HUANG, Houjia, Jinhua, Zhejiang 321000 (CN)
(74) Representative: Plougmann Vingtoft a/s
(86) International application number: PCT/CN2024/116830
(87) International publication number: WO 2025/185113

(57) **Abstract**

Provided are a rotor of an axial flux motor and an axial flux motor. The rotor of an axial flux motor includes a rotor carrier (1), a fixing ring (2), and multiple magnetic steel units (3). The rotor carrier (1) is circumferentially formed with multiple mounting slots (11), each magnetic steel unit (3) is mounted into a respective mounting slot (11), and the fixing ring (2) is mounted around the rotor carrier (1) and radially limits the magnetic steel units (3). Along the radial direction of the rotor carrier (1), the magnetic steel unit (3) includes an inner-ring magnetic steel assembly (31) and an outer-ring magnetic steel assembly (32), the rotor carrier (1) is provided with multiple limiting portions (12), and each limiting portion (12) radially limits a respective inner-ring magnetic steel assembly (31).

## Description

This application claims priority to Chinese Patent Application No. 202410254555.2, Chinese Patent Application No. 202410254552.9, Chinese Patent Application No. 202410254549.7, and Chinese Patent Application No. 202410254559.0 filed with the China National Intellectual Property Administration (CNIPA) on Mar. 06, 2024, the disclosures of which are incorporated herein by reference in their entireties.

### TECHNICAL FIELD

The present application relates to the technical field of axial flux motors, for example, to a rotor of an axial flux motor and an axial flux motor.

### BACKGROUND

Due to the advantages of a small axial size, high torque density, high power density, and high efficiency, axial flux motors, also known as disc motors, are widely applied in fields such as electric vehicles, general industry, and household appliances.

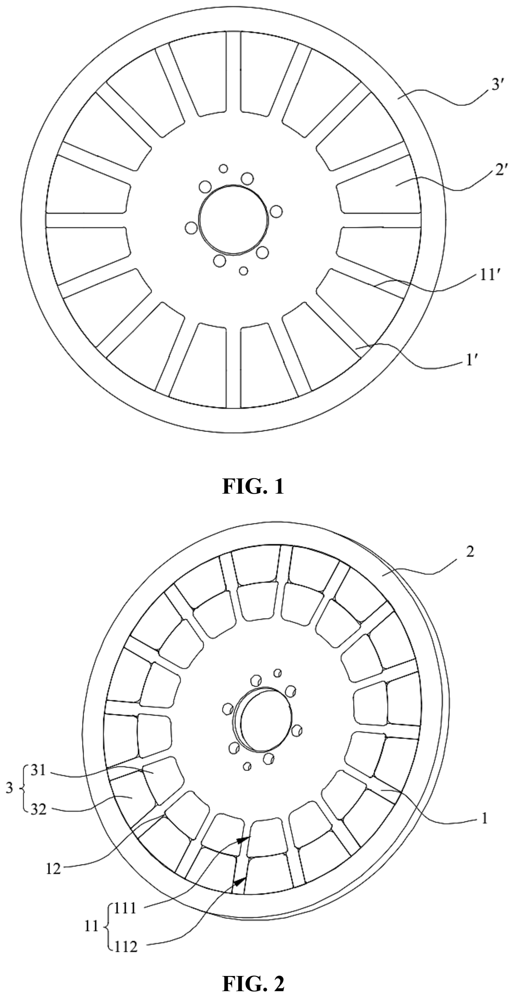

As shown in FIG. 1, a rotor of an axial flux motor typically includes a rotor carrier 1', a fixing ring 3', and multiple magnetic steels 2'. The rotor carrier 1' is formed with multiple mounting slots 11', and the multiple magnetic steels 2' are mounted into the multiple mounting slots 11', respectively. The fixing ring 3' is sleeved around the outer circumference of the rotor carrier 1', thereby radially limiting the magnetic steels 2' between the fixing ring 3' and the rotor carrier 1'. As the speed of the rotor increases, centrifugal forces generated by the magnetic steels 2' increase accordingly. However, the radial constraint exerted by the fixing ring 3' on the magnetic steels 2' is limited, which causes the preceding rotor structure to be unable to satisfy the high-speed development of the motor.

### SUMMARY

The present application provides a rotor of an axial flux motor, which can radially constrain magnetic steel units in a partitioned manner, enabling the magnetic steel units to overcome greater centrifugal forces and thereby allowing the rotor to be adapted to the high-speed applications of the axial flux motor.

A rotor of an axial flux motor includes a rotor carrier, a fixing ring, and multiple magnetic steel units, where the rotor carrier is circumferentially formed with multiple mounting slots, each magnetic steel unit is mounted into a respective mounting slot, and the fixing ring is mounted around the rotor carrier and is configured to radially limit the multiple magnetic steel units.

Along a radial direction of the rotor carrier, the magnetic steel unit includes an inner-ring magnetic steel assembly and an outer-ring magnetic steel assembly, the rotor carrier is provided with multiple limiting portions, and each limiting portion is configured to radially limit a respective inner-ring magnetic steel assembly.

As an optional solution, the mounting slot includes a first slot body and a second slot body that are arranged radially from inside to outside, the rotor carrier is configured to form the limiting portion between the first slot body and the second slot body, and at least part of an outer circumferential surface of the inner-ring magnetic steel assembly is configured to abut against the limiting portion.

As an optional solution, the rotor carrier includes two carrier components arranged axially, and the two carrier components are symmetrically arranged.

As an optional solution, the two carrier components are bonded together.

As an optional solution, the first slot body communicates with the second slot body, and an outer-ring circumferential size of the first slot body is larger than an inner-ring circumferential size of the second slot body to form the limiting portion.

As an optional solution, the first slot body does not communicate with the second slot body, and each limiting portion extends along a same circumferential trajectory as the respective inner-ring magnetic steel assembly.

As an optional solution, the rotor carrier is formed with a reinforcing rib, and the reinforcing rib is mounted around outer circumferences of multiple outer-ring magnetic steel assemblies.

As an optional solution, at least one of the following conditions is satisfied:
one of a sidewall of the first slot body parallel to the radial direction and a sidewall of the inner-ring magnetic steel assembly is provided with a first protrusion, and the other one is formed with a first groove, where the first protrusion engages with the first groove; or
one of a sidewall of the second slot body parallel to the radial direction and a sidewall of the outer-ring magnetic steel assembly is provided with a second protrusion, and the other one is formed with a second groove, where the second protrusion engages with the second groove.

As an optional solution, at least one of the following conditions is satisfied:
the inner-ring magnetic steel assembly is axially divided into two inner sub-segments; or
the outer-ring magnetic steel assembly is axially divided into two outer sub-segments.

### BRIEF DESCRIPTION OF DRAWINGS

FIG. 1 is a structural view of a rotor of an axial flux motor according to the related art.
FIG. 2 is a structural view of a rotor of an axial flux motor according to embodiment one of the present application.
FIG. 3 is a partial structural view of a rotor of an axial flux motor according to embodiment one of the present application.
FIG. 4 is a structural view of a rotor of an axial flux motor according to embodiment two of the present application.
FIG. 5 is a partial structural view of a rotor of an axial flux motor according to embodiment two of the present application.
FIG. 6 is a structural view of a rotor of an axial flux motor according to embodiment three of the present application.
FIG. 7 is a partial structural view of a rotor of an axial flux motor according to embodiment three of the present application.
FIG. 8 is a structural view of a rotor of an axial flux motor according to embodiment four of the present application.
FIG. 9 is a partial structural view of a rotor of an axial flux motor according to embodiment four of the present application.
FIG. 10 is an exploded view of a rotor of an axial flux motor according to embodiment four of the present application.
FIG. 11 is a view of a rotor of an axial flux motor during assembly according to embodiment four of the present application.
FIG. 12 is a structural view of a rotor of an axial flux motor according to embodiment five of the present application.
FIG. 13 is a partial structural view of a rotor of an axial flux motor according to embodiment five of the present application.
FIG. 14 is a structural view of a rotor of an axial flux motor according to embodiment six of the present application.
FIG. 15 is a partial structural view of a rotor of an axial flux motor according to embodiment six of the present application.
FIG. 16 is a structural view of a rotor of an axial flux motor according to embodiment seven of the present application.
FIG. 17 is an exploded view of a rotor of an axial flux motor according to embodiment seven of the present application.
FIG. 18 is a structural view of the fitting between an inner-ring magnetic-flux conducting disc and a rotor carrier according to embodiment seven of the present application.
FIG. 19 is a top view of structures in FIG. 18.
FIG. 20 is a sectional view taken along A-A of FIG. 19.
FIG. 21 is a structural view of a rotor of an axial flux motor according to embodiment eight of the present application.
FIG. 22 is an exploded view of a rotor of an axial flux motor according to embodiment eight of the present application.
FIG. 23 is a structural view of the fitting between an outer-ring magnetic-flux conducting disc and a rotor carrier according to embodiment eight of the present application.
FIG. 24 is a structural view of an outer-ring magnetic-flux conducting disc, a rotor carrier, and a fixing ring according to embodiment eight of the present application.
FIG. 25 is a structural view of a rotor of an axial flux motor according to embodiment nine of the present application.
FIG. 26 is an exploded view of a rotor of an axial flux motor according to embodiment nine of the present application.
FIG. 27 is a structural view of the fitting between an inner-ring magnetic-flux conducting disc, an outer-ring magnetic-flux conducting disc, and a rotor carrier according to embodiment nine of the present application.
FIG. 28 is a top view of structures in FIG. 27.
FIG. 29 is a sectional view taken along B-B of FIG. 28.
FIG. 30 is a structural view of the arrangement of magnetic steel units according to embodiment ten of the present application.
FIG. 31 is an assembly view of a rotor according to embodiment ten of the present application.
FIG. 32 is a structural view of a rotor of an axial flux motor according to embodiment ten of the present application.
FIG. 33A is a structural view of a first assembly process of a rotor of an axial flux motor according to embodiment eleven of the present application.
FIG. 33B is a structural view of a second assembly process of a rotor of an axial flux motor according to embodiment eleven of the present application.
FIG. 34 is a structural view of a rotor of an axial flux motor according to embodiment twelve of the present application.
FIG. 35 is an exploded view of a rotor of an axial flux motor according to embodiment twelve of the present application.
FIG. 36 is a structural view of a rotor carrier according to embodiment twelve of the present application.
FIG. 37 is a partial structural view of a rotor of an axial flux motor according to embodiment twelve of the present application.
FIG. 38 is a side view of a rotor of an axial flux motor according to embodiment twelve of the present application.
FIG. 39 is a cross-sectional view taken along A-A of FIG. 38.
FIG. 40 is an enlarged view of part B in FIG. 35.
FIG. 41 is another partial structural view of a rotor of an axial flux motor according to embodiment twelve of the present application.
FIG. 42 is a structural view of a rotor of an axial flux motor according to embodiment thirteen of the present application.
FIG. 43 is an exploded view of a rotor of an axial flux motor according to embodiment thirteen of the present application.
FIG. 44 is a structural view of a rotor carrier according to embodiment thirteen of the present application.
FIG. 45 is a partial structural view of a rotor of an axial flux motor according to embodiment thirteen of the present application.
FIG. 46 is a side view of a rotor of an axial flux motor according to embodiment thirteen of the present application.
FIG. 47 is a cross-sectional view taken along C-C of FIG. 45.
FIG. 48 is a structural view of a carrier component according to embodiment thirteen of the present application.
FIG. 49 is a structural view of a magnetic steel unit according to embodiment thirteen of the present application.
FIG. 50 is a flowchart of a method for manufacturing a rotor of an axial flux motor according to embodiment seven of the present application.
FIG. 51 is a flowchart of a method for manufacturing a rotor of an axial flux motor according to embodiment eight of the present application.
FIG. 52 is a flowchart of a method for manufacturing a rotor of an axial flux motor according to embodiment ten of the present application.

### Reference list

- 1': rotor carrier
- 11': mounting slot
- 2': magnetic steel
- 3': fixing ring
- 1: rotor carrier
- 11: mounting slot
- 111: first slot body
- 112: second slot body
- 12: limiting portion
- 13: carrier component
- 131: first accommodation slot
- 132: second accommodation slot
- 14: reinforcing rib
- 15: first protrusion
- 16: second protrusion
- 17: third protrusion
- 18: fourth protrusion
- 19: avoidance hole
- 2: fixing ring
- 3: magnetic steel unit
- 31: inner-ring magnetic steel assembly
- 311: inner sub-segment
- 312: first groove
- 32: outer-ring magnetic steel assembly
- 321: outer sub-segment
- 322: second groove
- 331: third groove
- 332: fourth groove
- 41: inner-ring magnetic-flux conducting disc
- 411: inner-ring filling portion
- 412: inner-ring connecting portion
- 42: outer-ring magnetic-flux conducting disc
- 421: outer-ring filling portion
- 422: outer-ring connecting portion
- 5: constraint mechanism
- 51: connecting assembly
- 511: column
- 512: first pressing plate
- 513: second pressing plate
- 5131: mounting hole
- 52: inner-ring sheath
- 53: outer-ring sheath

### DETAILED DESCRIPTION

The present application is described below in conjunction with the drawings and embodiments. It is to be understood that the embodiments described herein are intended to explain the present application and not to limit the present application. For ease of description, only part, not all, of the structures related to the present application are illustrated in the drawings.

In the description of the present application, terms "joined", "connected", and "secured" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, specific meanings of the preceding terms in the present application may be construed according to specific circumstances.

In the present application, unless otherwise specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "upper", "lower", "right", and "left" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present application. Additionally, terms "first" and "second" are used for distinguishing between descriptions and have no special meanings.

### Embodiment one

This embodiment provides a rotor of an axial flux motor and an axial flux motor. The axial flux motor includes at least one stator and the preceding rotor of an axial flux motor. In some embodiments, the axial flux motor may also include two stators and the preceding rotor of an axial flux motor. In some embodiments, the axial flux motor may also include two preceding rotors of an axial flux motor and a rotor. The rotor of an axial flux motor in this embodiment can radially constrain magnetic steel units in a partitioned manner, enabling the magnetic steel units to overcome greater centrifugal forces and thereby allowing the rotor to be adapted to the high-speed applications of the axial flux motor.

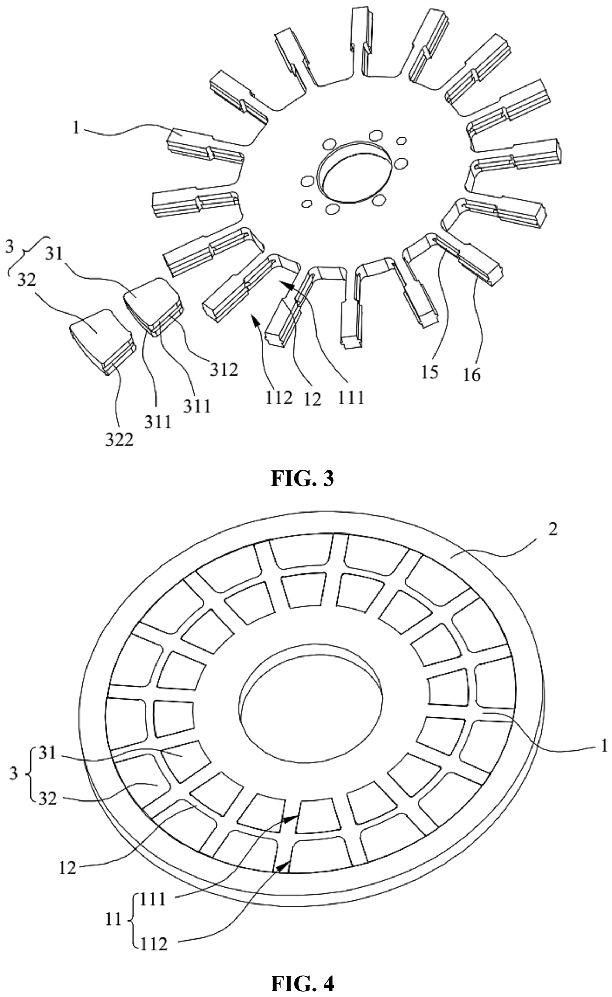

As shown in FIGS. 2 and 3, the rotor of an axial flux motor includes a rotor carrier 1, multiple magnetic steel units 3, and a fixing ring 2. The rotor carrier 1 has a circular contour and is circumferentially formed with multiple mounting slots 11. Optionally, the multiple mounting slots 11 are uniformly distributed around the circumference of the rotor carrier 1. Each magnetic steel unit 3 is mounted into a respective mounting slot 11. Along the radial direction of the rotor carrier 1, the magnetic steel unit 3 includes an inner-ring magnetic steel assembly 31 and an outer-ring magnetic steel assembly 32. The rotor carrier 1 is provided with multiple limiting portions 12, and each limiting portion 12 radially constrains a respective inner-ring magnetic steel assembly 31. The fixing ring 2 is mounted around the rotor carrier 1 and radially limits outer-ring magnetic steel assemblies 32.

In the rotor of an axial flux motor in the present application, the limiting portions 12 on the rotor carrier 1 can radially constrain inner-ring magnetic steel assemblies 31 to overcome centrifugal forces during rotation, and the fixing ring 2 can radially constrain the outer-ring magnetic steel assemblies 32 to overcome centrifugal forces. In this embodiment, the rotor radially constrains the magnetic steel units 3 in a portioned manner, that is, the rotor carrier 1 shares a portion of the centrifugal forces generated by the magnetic steel units 3. Therefore, under the condition that the constraining force of the fixing ring 2 is given, the outer-ring magnetic steel assemblies 32 rotating at a higher speed can be constrained, and the entire rotor can effectively constrain the magnetic steel units 3 rotating at a higher speed, so as to be adapted to the high-speed applications of the axial flux motor. In this embodiment, the axial flux motor, by employing the preceding rotor, has a robust structure and can be adapted to the high-speed applications.

As shown in FIGS. 2 and 3, the mounting slot 11 includes a first slot body 111 and a second slot body 112 that are arranged radially from inside to outside. The rotor carrier 1 forms the limiting portion 12 between the first slot body 111 and the second slot body 112, and at least part of the outer peripheral surface of the inner-ring magnetic steel assembly 31 abuts against the limiting portion 12. Configuring the mounting slot 11 to be composed of the two slot bodies not only is convenient to respectively support and limit the inner-ring magnetic steel assembly 31 and the outer-ring magnetic steel assembly 32, but also facilitates formation of the limiting portion 12 on the rotor carrier 1. In this embodiment, the first slot body 111 and the second slot body 112 are configured as fan-ring structures.

As shown in FIG. 2, in this embodiment, the first slot body 111 communicates with the second slot body 112, and the outer-ring circumferential size of the first slot body 111 is larger than the inner-ring circumferential size of the second slot body 112, thereby forming the stepped limiting portion 12. The outer-ring circumferential surface of the inner-ring magnetic steel assembly 31 abuts against the stepped limiting portion 12 so that the limiting portion 12 radially constrains the inner-ring magnetic steel assembly 31. Optionally, along the circumferential direction, two ends of the outer ring of the first slot body 111 form the preceding step and abut against two ends of the circumferential surface of the inner-ring magnetic steel assembly 31, respectively, thereby making the force on the inner-ring magnetic steel assembly 31 more uniform and further ensuring that the inner-ring magnetic steel assembly 31 is effectively constrained during high-speed rotation of the rotor.

Optionally, as shown in FIG. 3, one of the sidewall of the first slot body 111 parallel to the radial direction and the sidewall of the inner-ring magnetic steel assembly 31 is provided with a first protrusion 15, the other one is formed with a first groove 312, and the first protrusion 15 engages with the first groove 312. The engagement of the first protrusion 15 with the first groove 312 allows the rotor carrier 1 to axially limit the inner-ring magnetic steel assembly 31, thereby making the overall structure of the rotor more robust and preventing the rotor from coming apart during high-speed rotation. In this embodiment, two sidewalls of the first slot body 111 are provided with first protrusions 15, respectively, and two sidewalls of the inner-ring magnetic steel assembly 31 are formed with first grooves 312, respectively, so that each first protrusion 15 engages with a respective first groove 312.

Similarly, as shown in FIG. 3, one of the sidewall of the second slot body 112 parallel to the radial direction and the sidewall of the outer-ring magnetic steel assembly 32 is provided with a second protrusion 16, the other one is formed with a second groove 322, and the second protrusion 16 engages with the second groove 322. The engagement of the second protrusion 16 with the second groove 322 allows the rotor carrier 1 to axially limit the outer-ring magnetic steel assembly 32, thereby further making the overall structure of the rotor more robust and preventing the rotor from coming apart during the high-speed rotation. In this embodiment, two sidewalls of the second slot body 112 are provided with second protrusions 16, respectively, and two sidewalls of the outer-ring magnetic steel assembly 32 are formed with second grooves 322, respectively, so that each second protrusion 16 engages with a respective second groove 322.

Optionally, as shown in FIG. 3, the inner-ring magnetic steel assembly 31 is axially divided into two inner sub-segments 311 that are magnetically attracted to each other and together form the first groove 312. For one aspect, during the assembly of the rotor, the two inner sub-segments 311 can be inserted into the first slot body 111 from two ends of the rotor carrier 1 along the axial direction of the rotor carrier 1, respectively, and when the two inner sub-segments 311 are magnetically attracted and secured, the first groove 312 perfectly engages with the first protrusion 15; for another aspect, configuring the inner-ring magnetic steel assembly 31 to include the two inner sub-segments 311 arranged axially can also axially split the induced eddy current loop of the rotor, thereby reducing eddy current losses of the rotor. In some embodiments, adhesive may also be applied to the circumferential surface of the inner-ring magnetic steel assembly 31 so that the inner-ring magnetic steel assembly 31 is bonded to the slot wall of the first slot body 111, thereby further improving the reliability of the connection between the inner-ring magnetic steel assembly 31 and the rotor carrier 1.

In some embodiments, the inner-ring magnetic steel assembly 31 is not segmented axially. In this case, to ensure that the inner-ring magnetic steel assembly 31 can be smoothly mounted into the first slot body 111, the inner-ring magnetic steel assembly 31 can be used as an insert and integrally molded with the rotor carrier 1.

As shown in FIG. 2, in this embodiment, the second slot body 112 penetrates through the rotor carrier 1 in the radial direction to the outer peripheral surface of the rotor carrier 1, and the outer-ring magnetic steel assembly 32 is not segmented axially. The outer-ring magnetic steel assembly 32 can be mounted into the second slot body 112 in the radial direction, thereby improving the convenience of mounting the outer-ring magnetic steel assembly 32. After all the outer-ring magnetic steel assemblies 32 are mounted into the second slot bodies 112, respectively, the fixing ring 2 is mounted and/or formed.

In some embodiments (not shown), the outer-ring magnetic steel assembly 32 is also axially divided into two outer sub-segments. This configuration can axially split the induced eddy current loop of the rotor, thereby further reducing the eddy current losses of the rotor.

### Embodiment two

This embodiment provides a rotor of an axial flux motor and an axial flux motor. The inventive concept of the rotor of an axial flux motor is the same as that of embodiment one, that is, the rotor carrier 1 is provided with the multiple limiting portions 12 to respectively radially constrain the inner-ring magnetic steel assemblies 31. The difference between this embodiment and embodiment one lies in the specific configuration of the limiting portion 12, as described in detail below.

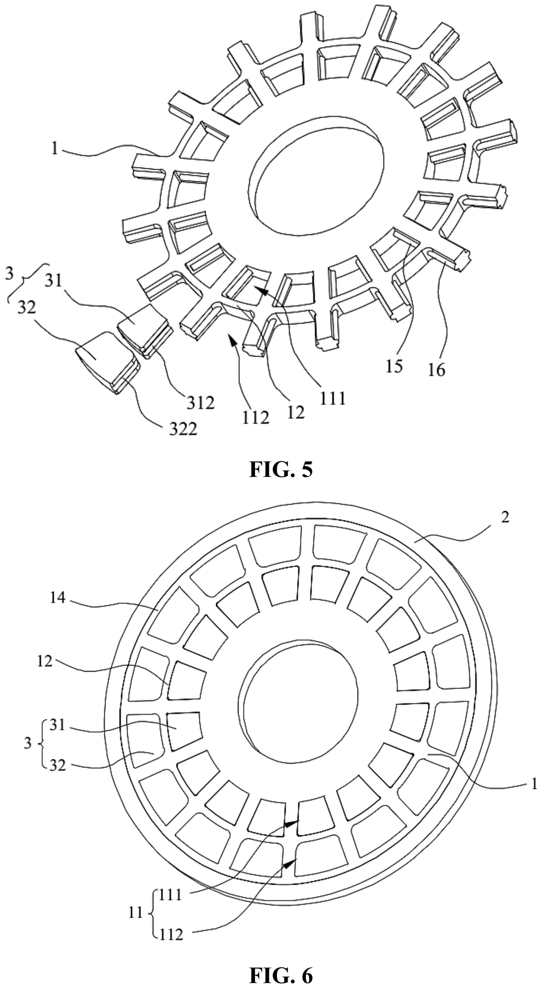

As shown in FIGS. 4 and 5, in this embodiment, the first slot body 111 does not communicate with the second slot body 112, and the solid structure between the first slot body 111 and the second slot body 112 forms the limiting portion 12. Each limiting portion 12 extends along the same circumferential trajectory as the respective inner-ring magnetic steel assembly 31, that is, the outer-ring circumferential surface of the inner-ring magnetic steel assembly 31 fits the limiting portion 12 completely. This can radially constrain the inner-ring magnetic steel assembly 31 more stably and uniformly to overcome the centrifugal force during rotation, thereby making the structure of the rotor more stable and reliable during the high-speed rotation. As shown in FIG. 5, the multiple limiting portions 12 together form a ring-shaped structure. This structure can improve the structural strength of the rotor carrier 1, thereby preventing the rotor from coming apart during the high-speed rotation.

In this embodiment, the structure of the inner-ring magnetic steel assembly 31, the structure of the outer-ring magnetic steel assembly 32, the manner in which the inner-ring magnetic steel assembly 31 is fitted with the rotor carrier 1, and the manner in which the outer-ring magnetic steel assembly 32 is fitted with the rotor carrier 1 are all the same as thoes in embodiment one, and are therefore not repeated herein.

### Embodiment three

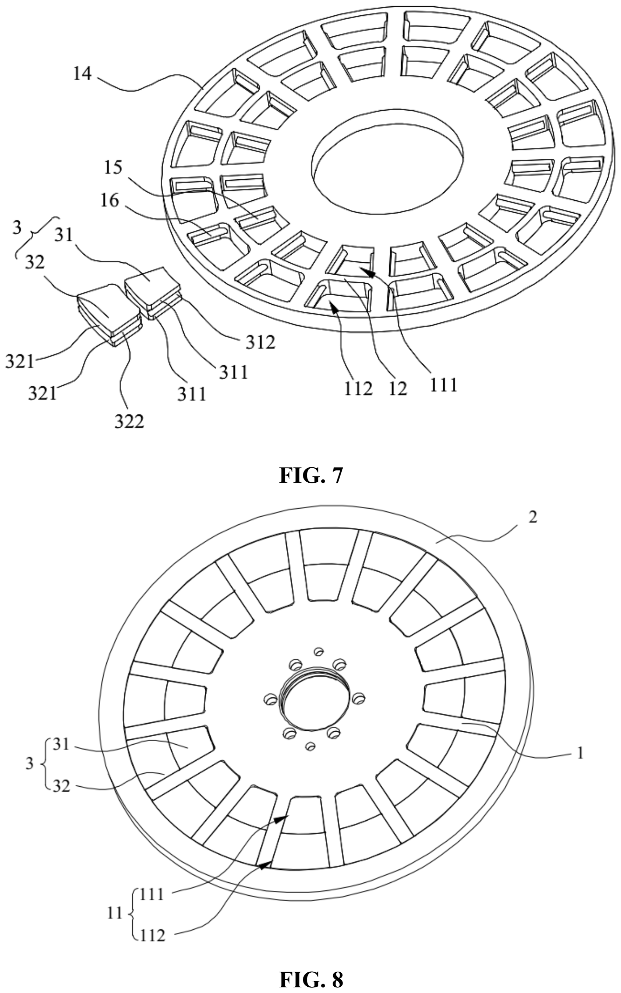

This embodiment provides a rotor of an axial flux motor and an axial flux motor. The inventive concept of the rotor of an axial flux motor is the same as that of embodiment two. As shown in FIGS. 6 and 7, in this embodiment, the first slot body 111 does not communicate with the second slot body 112, and each limiting portion 12 extends along the same circumferential trajectory as the respective inner-ring magnetic steel assembly 31. The difference between this embodiment and embodiment two lies in the manner in which the rotor carrier 1 constrains the outer-ring magnetic steel assembly 32, as described in detail below.

As shown in FIG. 6, the rotor carrier 1 is further formed with a reinforcing rib 14 that is mounted around outer circumferences of the multiple outer-ring magnetic steel assemblies 32. In this embodiment, the reinforcing rib 14 and the fixing ring 2 jointly radially constrain the outer-ring magnetic steel assemblies 32, so as to overcome the centrifugal forces generated by the outer-ring magnetic steel assemblies 32 during the high-speed rotation of the rotor, thereby ensuring structural stability of the rotor during the high-speed operation and satisfying the high-speed applications of the motor.

In this embodiment, the structure of the inner-ring magnetic steel assembly 31, the manner in which the inner-ring magnetic steel assembly 31 is fitted with the rotor carrier 1, and the configuration of the second protrusion 16 within the second slot body 112 are all the same as those in embodiment one, and are therefore not repeated herein.

As shown in FIG. 7, in this embodiment, the outer-ring magnetic steel assembly 32 is axially divided into two outer sub-segments 321 that are magnetically attracted to each other and together form the second groove 322. For one aspect, during the assembly of the rotor, the two outer sub-segments 321 can be inserted into the second slot body 112 from the two ends of the rotor carrier 1 along the axial direction of the rotor carrier 1, respectively, and when the two outer sub-segments 321 are magnetically attracted and secured, the second groove 322 perfectly engages with the second protrusion 16; for another aspect, configuring the outer-ring magnetic steel assembly 32 to include the two outer sub-segments 321 arranged axially can also axially split the induced eddy current loop of the rotor, thereby reducing the eddy current losses of the rotor. In some embodiments, adhesive may also be applied to the circumferential surface of the outer-ring magnetic steel assembly 32 so that the outer-ring magnetic steel assembly 32 is bonded to the slot wall of the second slot body 112, thereby further improving the reliability of the connection between the outer-ring magnetic steel assembly 32 and the rotor carrier 1.

It is to be understood that, in some embodiments, the outer-ring magnetic steel assembly 32 is not segmented axially. In this case, to ensure that the outer-ring magnetic steel assembly 32 is fitted with the second slot body 112, the outer-ring magnetic steel assembly 32 can be used as an insert and integrally molded with the rotor carrier 1.

### Embodiment four

This embodiment provides a rotor of an axial flux motor and an axial flux motor. The inventive concept of the rotor of an axial flux motor in this embodiment is the same as that of embodiment one, that is, the rotor carrier 1 is provided with the multiple limiting portions 12 to respectively radially constrain the multiple inner-ring magnetic steel assemblies 31. The difference between this embodiment and embodiment one lies in the manner in which the rotor carrier 1 is fitted with the inner-ring magnetic steel assembly 31 and the outer-ring magnetic steel assembly 32, as described in detail below.

As shown in FIGS. 8 to 10, the rotor carrier 1 includes two carrier components 13 arranged axially, and the two carrier components 13 are symmetrically arranged. Neither the inner-ring magnetic steel assembly 31 nor the outer-ring magnetic steel assembly 32 is segmented axially. In this embodiment, configuring the rotor carrier 1 to be composed of the two carrier components 13 can also facilitate mounting even when the inner-ring magnetic steel assembly 31 and the outer-ring magnetic steel assembly 32 are not segmented.

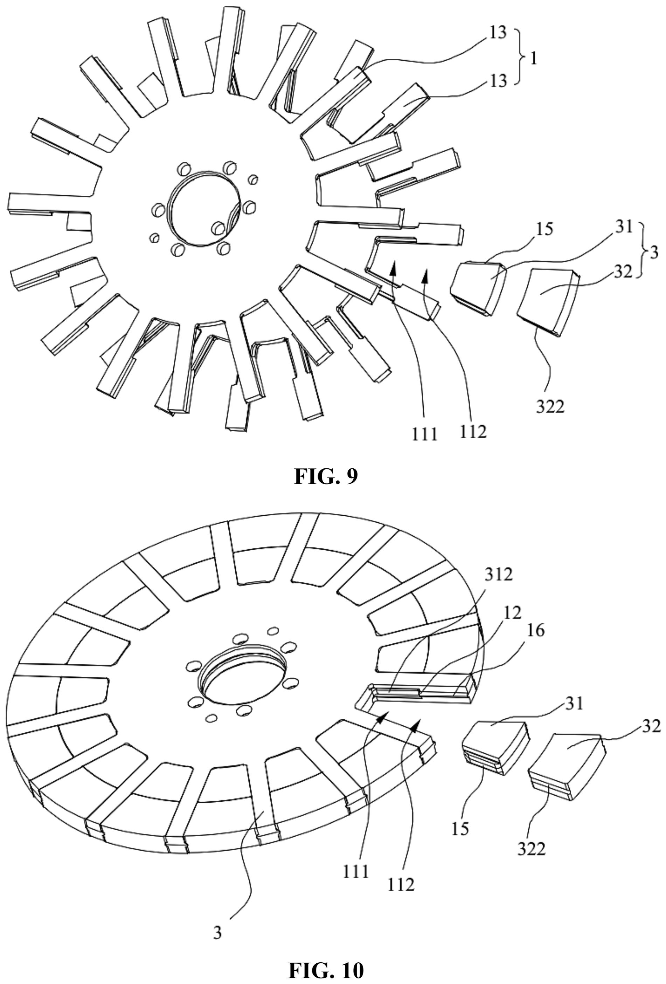

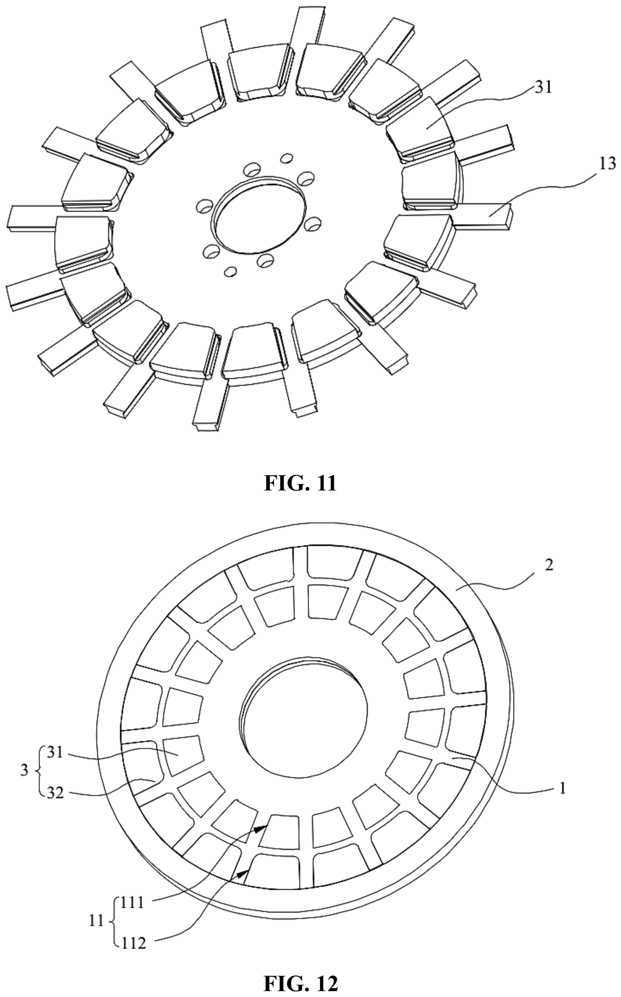

Optionally, in this embodiment, as shown in FIG. 10, the first groove 312 is formed on the inner wall of the first slot body 111, and the first protrusion 15 is provided on the inner wall of the inner-ring magnetic steel assembly 31. The second groove 322 is formed on the sidewall of the outer-ring magnetic steel assembly 32, and the second protrusion 16 is provided on the sidewall of the second slot body 112. Therefore, as shown in FIG. 11, during the assembly of the rotor, the multiple inner-ring magnetic steel assemblies 31 are placed in first slot bodies 111 of a first carrier component 13, respectively; then, a second carrier component 13 is snap-fitted into the first carrier component 13; next, the multiple outer-ring magnetic steel assemblies 32 are inserted radially into second slot bodies 112, respectively; and the fixing ring 2 is sleeved onto or formed around the outer circumference of the rotor carrier 1. In this case, as shown in FIG. 10, a second groove 322 on each outer-ring magnetic steel assembly 32 is fitted with a respective second protrusion 16, so as to axially clamp and limit the two carrier components 13. Moreover, first grooves 312 on the two carrier components 13 are fitted with first protrusions 15 on the inner-ring magnetic steel assemblies 31 to axially limit the inner-ring magnetic steel assemblies 31. That is, the rotor carrier 1, the inner-ring magnetic steel assemblies 31, and the outer-ring magnetic steel assemblies 32 are mutually limited axially, thereby improving the overall structural robustness of the rotor.

In this embodiment, the end surface of the second protrusion 16 facing the first slot body 111 forms the limiting portion 12 and radially limits the inner-ring magnetic steel assembly 31.

It is to be understood that, in some embodiments, adhesive may also be applied between the two carrier components 13 so that the two carrier components 13 are bonded together, thereby further improving the overall structural robustness of the rotor.

### Embodiment five

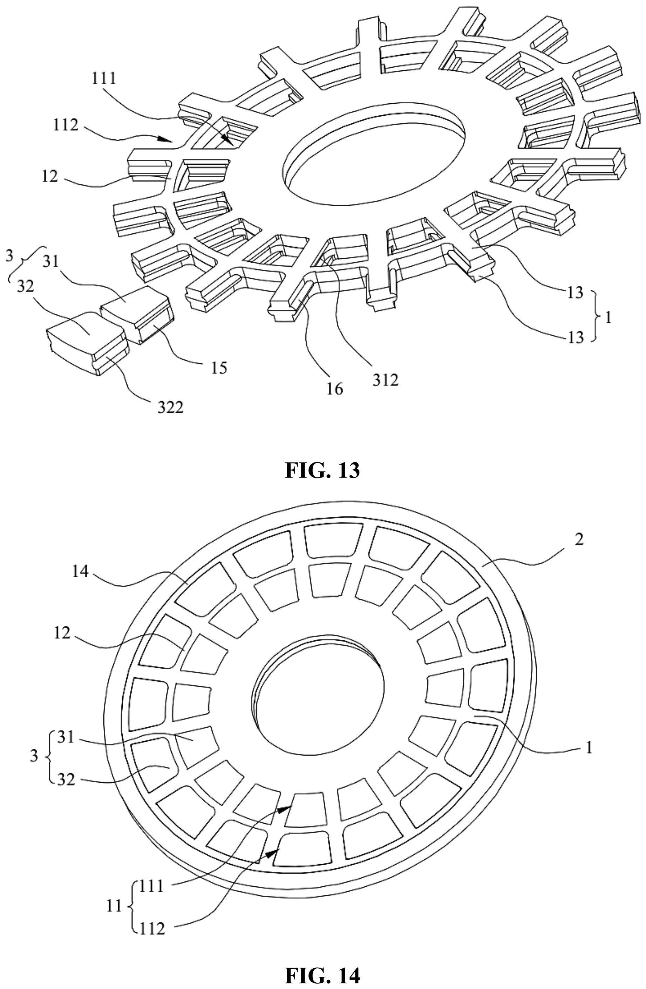

This embodiment provides a rotor of an axial flux motor and an axial flux motor. The inventive concept of the rotor of an axial flux motor is the same as that of embodiment four. As shown in FIGS. 12 and 13, in this embodiment, configuring the rotor carrier 1 to be composed of the two carrier components 13 can also facilitate the assembly even when the inner-ring magnetic steel assembly 31 and the outer-ring magnetic steel assembly 32 are not segmented axially. The difference between this embodiment and embodiment four lies in the configuration of the limiting portion 12, as described in detail below:

As shown in FIG. 13, in this embodiment, the first slot body 111 does not communicate with the second slot body 112, and the solid structure between the first slot body 111 and the second slot body 112 forms the limiting portion 12. In other words, each limiting portion 12 extends along the same circumferential trajectory as the respective inner-ring magnetic steel assembly 31, that is, the outer-ring circumferential surface of the inner-ring magnetic steel assembly 31 fits the limiting portion 12 completely. This can radially constrain the inner-ring magnetic steel assembly 31 more stably and uniformly to overcome the centrifugal force, thereby making the structure of the rotor more stable and reliable during the high-speed rotation. As shown in FIG. 13, the multiple limiting portions 12 together form the ring-shaped structure. This structure can improve the structural strength of the rotor carrier 1, thereby preventing the rotor from coming apart during the high-speed rotation.

In this embodiment, the manner in which the first protrusion 15 is fitted with the first groove 312, the manner in which the second protrusion 16 is fitted with the second groove 322, and the assembly manner of the rotor are all the same as those in embodiment four, and are therefore not repeated herein.

### Embodiment six

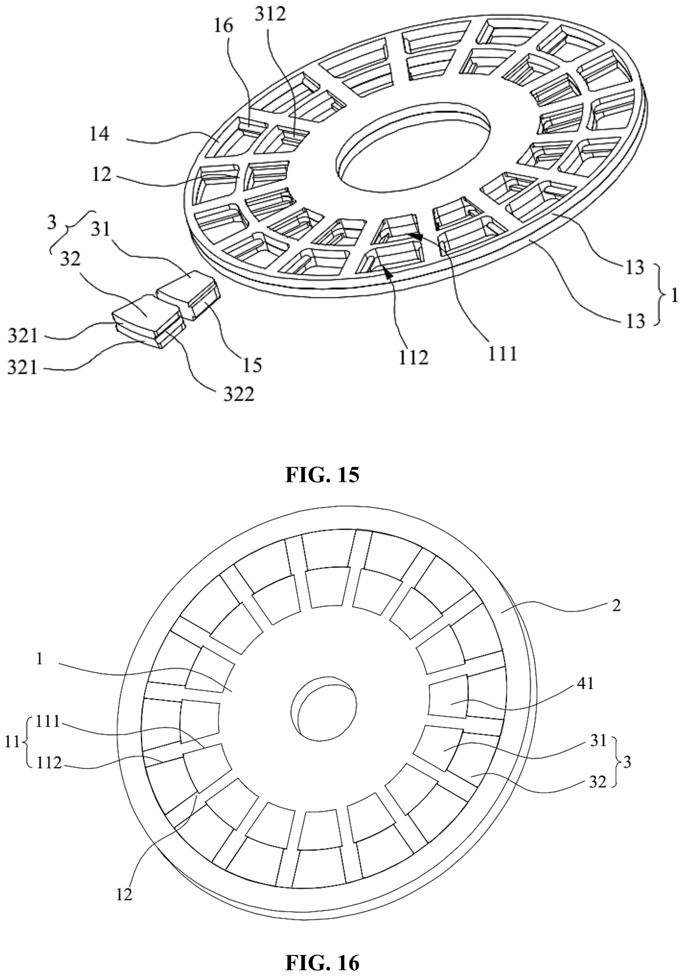

This embodiment provides a rotor of an axial flux motor and an axial flux motor. The inventive concept of the rotor of an axial flux motor in this embodiment is the same as that of embodiment five. As shown in FIGS. 14 and 15, in this embodiment, the rotor carrier 1 is also configured to be composed of the two carrier components 13, the inner-ring magnetic steel assembly 31 and the outer-ring magnetic steel assembly 32 are not segmented axially, and each limiting portion 12 extends along the same circumferential trajectory as the respective inner-ring magnetic steel assembly 31. The difference between this embodiment and embodiment five lies in the manner in which the rotor carrier 1 constrains the outer-ring magnetic steel assembly 32, as described in detail below.

As shown in FIGS. 14 and 15, the rotor carrier 1 is further formed with the reinforcing rib 14 that is mounted around the outer circumferences of the multiple outer-ring magnetic steel assemblies 32. In this embodiment, the reinforcing rib 14 and the fixing ring 2 jointly radially constrain the outer-ring magnetic steel assemblies 32, so as to overcome the centrifugal forces generated by the outer-ring magnetic steel assemblies 32 during the high-speed rotation of the rotor, thereby ensuring the structural stability of the rotor during the high-speed operation and satisfying the high-speed applications of the motor.

In this embodiment, the structure of the inner-ring magnetic steel assembly 31, the manner in which the inner-ring magnetic steel assembly 31 is fitted with the rotor carrier 1, and the configuration of the second protrusion 16 within the second slot body 112 are all the same as those in embodiment five, and are therefore not repeated herein.

As shown in FIG. 15, in this embodiment, the outer-ring magnetic steel assembly 32 is axially divided into the two outer sub-segments 321 that are magnetically attracted to each other and together form the second groove 322. For one aspect, during the assembly of the rotor, the two outer sub-segments 321 can be inserted into the second slot body 112 from the two ends of the rotor carrier 1 along the axial direction of the rotor carrier 1, respectively, and when the two outer sub-segments 321 are magnetically attracted and secured, the second groove 322 perfectly engages with the second protrusion 16; for another aspect, configuring the outer-ring magnetic steel assembly 32 to include the two outer sub-segments 321 arranged axially can also axially split the induced eddy current loop of the rotor, thereby reducing the eddy current losses of the rotor. In some embodiments, the adhesive may also be applied to the circumferential surface of the outer-ring magnetic steel assembly 32 so that the outer-ring magnetic steel assembly 32 is bonded to the slot wall of the second slot body 112, thereby further improving the reliability of the connection between the outer-ring magnetic steel assembly 32 and the rotor carrier 1.

In this embodiment, the rotor is generally assembled as follows: the multiple inner-ring magnetic steel assemblies 31 are placed in the first slot bodies 111 of the first carrier component 13, respectively; then, the second carrier component 13 is snap-fitted into the first carrier component 13; next, the two outer sub-segments 321 of the same outer-ring magnetic steel assembly 32 are mounted into the second slot body 112 from two ends of the second slot body 112 along the axial direction, respectively; and after all the outer-ring magnetic steel assemblies 32 are mounted onto the rotor carrier 1 in this manner, the fixing ring 2 is sleeved onto or formed around the outer circumference of the rotor carrier 1. In this case, the second groove 322 on each outer-ring magnetic steel assembly 32 is fitted with the respective second protrusion 16, so as to axially clamp and limit the two carrier components 13. Moreover, the first grooves 312 on the two carrier components 13 are fitted with the first protrusions 15 on the inner-ring magnetic steel assemblies 31 to axially limit the inner-ring magnetic steel assemblies 31. That is, the rotor carrier 1, the inner-ring magnetic steel assemblies 31, and the outer-ring magnetic steel assemblies 32 are mutually limited axially, thereby improving the overall structural robustness of the rotor.

It is to be understood that, in some embodiments, the outer-ring magnetic steel assembly 32 is not segmented axially. In this case, to ensure that the outer-ring magnetic steel assembly 32 is fitted with the second slot body 112, the outer-ring magnetic steel assembly 32 can be used as the insert and integrally molded with the rotor carrier 1.

The rotor of an axial flux motor in the present application has the advantages below.
(1) The limiting portions on the rotor carrier can radially constrain the inner-ring magnetic steel assemblies to overcome the centrifugal forces during the rotation, and the fixing ring can radially constrain the outer-ring magnetic steel assemblies to overcome the centrifugal forces during the rotation. The rotor radially constrains the magnetic steel units in a portioned manner, that is, the rotor carrier shares a portion of the centrifugal forces generated by the magnetic steel units. Therefore, under the condition that the constraining force of the fixing ring is given, the outer-ring magnetic steel assemblies rotating at the higher speed can be constrained, and the entire rotor can effectively constrain the magnetic steel units rotating at the higher speed, so as to be adapted to the high-speed applications of the axial flux motor.
(2) The reinforcing rib and the fixing ring can jointly radially constrain the outer-ring magnetic steel assemblies, and the reinforcing rib can also strengthen the structure of the rotor carrier, further ensuring the structural stability of the rotor during the high-speed rotation and preventing the rotor from coming apart.
(3) Configuring the inner-ring magnetic steel assembly to be segmented axially can not only facilitate the assembly of the inner-ring magnetic steel assembly with the rotor carrier, but also axially split the induced eddy current loop of the rotor, thereby reducing the eddy current losses of the rotor.
(4) Configuring the rotor carrier to include the two carrier components arranged axially can facilitate the assembly with the rotor carrier even when the inner-ring magnetic steel assembly and the outer-ring magnetic steel assembly are not segmented axially.

### Embodiment seven

This embodiment provides a rotor of an axial flux motor and an axial flux motor. The axial flux motor includes at least one stator and the preceding rotor of an axial flux motor. In some embodiments, the axial flux motor may also include two stators and the preceding rotor of an axial flux motor. In some embodiments, the axial flux motor may also include two preceding rotors of an axial flux motor and a rotor. The rotor of an axial flux motor in this embodiment can reduce the amount of magnetic steel used while ensuring a better magnetic flux, thereby lowering production costs. By employing the preceding rotor, the axial flux motor can lower the production costs while maintaining better torque and power.

As shown in FIGS. 16 to 18, the rotor of an axial flux motor includes a rotor carrier 1, a magnetic-flux conducting disc assembly, and multiple magnetic steel units 3. The rotor carrier 1 has a circular contour and is circumferentially formed with multiple mounting slots 11. Optionally, the multiple mounting slots 11 are uniformly distributed around the circumference of the rotor carrier 1. The magnetic-flux conducting disc assembly also has a circular contour and is coaxially arranged with and connected to the rotor carrier 1. The magnetic-flux conducting disc assembly is made of a magnetic-flux conducting material and includes multiple filling portions. The number of filling portions is the same as the number of mounting slots 11. Each filling portion can fill part of the space of a respective mounting slot 11. Each magnetic steel unit 3 is disposed in the respective mounting slot 11 and fills the remaining space of the respective mounting slot 11. Each mounting slot 11 is filled by a magnetic steel unit 3 and a filling portion. Two circumferentially adjacent magnetic steel units 3 have opposite north-south (NS) polarities. Even-numbered magnetic steel units 3 are provided, and every two adjacent magnetic steel units 3 form a pole pair.

In the rotor of an axial flux motor in this embodiment, the filling portion of the magnetic-flux conducting disc assembly fills the part of the mounting slot 11, and the magnetic steel unit 3 only needs to fill the remaining space of the mounting slot 11. As a result, the overall amount of magnetic steel used in the rotor can be reduced, thereby lowering the manufacturing cost of the rotor. Since the magnetic-flux conducting disc assembly is made of the magnetic-flux conducting material with low magnetic reluctance, a "virtual magnetic steel" is formed at each mounting slot 11, thereby reducing attenuation of the magnetic flux as much as possible. Even so, the rotor can still maintain a higher magnetic flux, ultimately ensuring that the motor still has high torque and power.

Optionally, the volume of each magnetic steel unit 3 accounts for 50% of the volume of the respective mounting slot 11. It is to be understood that, as the amount of magnetic steel used is reduced, the magnetic flux at each magnetic steel unit 3, as well as the torque and power of the motor manufactured using the rotor all decrease to some extent. Experimental verification shows that when the amount of magnetic steel used is reduced by half, the magnetic flux at each magnetic steel unit 3 can be maintained at 80% to 85% of that in a full-magnetic steel solution (in which the mounting slot 11 is completely filled with the magnetic steel unit 3), and the torque and power of the motor manufactured using the rotor can both reach 80% to 90% of those of the full-magnetic steel solution. That is, by controlling the volume ratio of the filling portion relative to the mounting slot 11, that is, the volume ratio of the magnetic steel unit 3 relative to the mounting slot 11, the motor can maintain better performance under the premise that the manufacturing costs of the rotor of an axial flux motor and the motor are lowered.

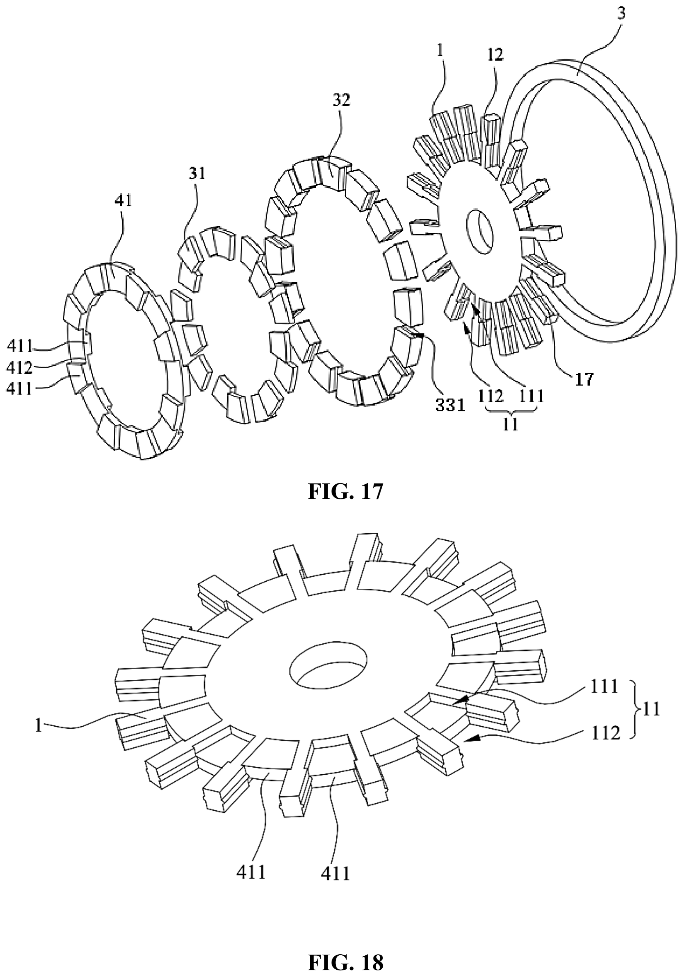

Optionally, the magnetic-flux conducting disc assembly is made of a soft magnetic material such as silicon steel, or another material having high magnetic permeability. Optionally, the rotor carrier 1 may be made of a non-magnetic-flux conducting material. In this embodiment, as shown in FIG. 17, each mounting slot 11 extends through the rotor carrier 1 in the radial direction to the circumferential surface of the rotor carrier 1 so that at least part of the magnetic steel unit 3 can be mounted from the radial direction of the mounting slot 11, thereby improving the convenience of mounting the magnetic steel unit 3.

As the motor continues to develop toward higher rotational speeds, the magnetic steel unit 3 generates a larger centrifugal force during the high-speed rotation of the rotor, which makes it difficult for the fixing ring 2 to reliably constrain the magnetic steel unit, thereby limiting the high-speed applications.

Optionally, as shown in FIGS. 16 to 18, along the radial direction of the rotor carrier 1, the mounting slot 11 includes a first slot body 111 and a second slot body 112, and the magnetic steel unit 3 includes an inner-ring magnetic steel assembly 31 and an outer-ring magnetic steel assembly 32, where the inner-ring magnetic steel assembly 31 is accommodated in the first slot body 111, and the outer-ring magnetic steel assembly 32 is accommodated in the second slot body 112. The rotor carrier 1 is provided with limiting portions 12, and each limiting portion 12 radially limits a respective inner-ring magnetic steel assembly 31. In the rotor in this embodiment, the limiting portions 12 on the rotor carrier 1 can radially constrain inner-ring magnetic steel assemblies 31 to overcome centrifugal forces during rotation, and the fixing ring 2 can radially constrain outer-ring magnetic steel assemblies 32 to overcome centrifugal forces during rotation. That is, the magnetic steel units 3 are radially constrained in a partitioned manner, and the rotor carrier 1 shares a portion of the centrifugal forces generated by the magnetic steel units 3 during rotation. Therefore, under the condition that the constraining force of the fixing ring 2 is given, the outer-ring magnetic steel assemblies 32 rotating at a higher speed can be constrained, and the entire rotor can effectively constrain the magnetic steel units 3 rotating at a higher speed, so as to be adapted to the high-speed applications of the axial flux motor.

In this embodiment, as shown in FIGS. 16 and 17, the first slot body 111 communicates with the second slot body 112, and the outer-ring circumferential size of the first slot body 111 is larger than the inner-ring circumferential size of the second slot body 112, thereby forming the limiting portion 12. In other embodiments, the first slot body 111 may not communicate with the second slot body 112, and the solid structure between the first slot body 111 and the second slot body 112 forms the limiting portion 12. In this embodiment, the inner-ring magnetic steel assembly 31 and the outer-ring magnetic steel assembly 32 are configured as fan-ring structures.

Optionally, as shown in FIG. 17, one of the sidewall of the second slot body 112 parallel to the radial direction and the sidewall of the outer-ring magnetic steel assembly 32 is provided with a third protrusion 17, the other one is formed with a third groove 331, and the third protrusion 17 engages with the third groove 331. The engagement of the third protrusion 17 with the third groove 331 allows the rotor carrier 1 to axially limit the outer-ring magnetic steel assembly 31, thereby making the overall structure of the rotor more robust. In this embodiment, the sidewall of the second slot body 112 parallel to the radial direction is provided with the third protrusion 17, and the sidewall of the outer-ring magnetic steel assembly 32 is formed with the third groove 331. When being mounted, the outer-ring magnetic steel assembly 32 can be inserted radially into the second slot body 112.

As shown in FIGS. 17 and 18, in this embodiment, the magnetic-flux conducting disc assembly includes an inner-ring magnetic-flux conducting disc 41. The inner-ring magnetic-flux conducting disc 41 includes multiple inner-ring filling portions 411 that are spaced apart along the circumference of the rotor carrier 1. Each inner-ring filling portion 411 fills part of the space of the first slot body 111, and the inner-ring magnetic steel assembly 31 fills the remaining space of the first slot body 111. The outer-ring magnetic steel assembly 32 is mounted into the second slot body 112. In this embodiment, the inner-ring filling portions 411 serve as filling portions of the magnetic-flux conducting disc assembly. The inner-ring filling portions 411 are provided to form "virtual magnetic steels", thereby reducing the amount of magnetic steel used in the magnetic steel units 3 and lowering the manufacturing cost of the rotor. Optionally, the inner-ring magnetic steel assembly 31 can be fixed in the first slot body 111 by bonding or magnetically attracting the inner-ring filling portion 411, which is not specifically limited herein.

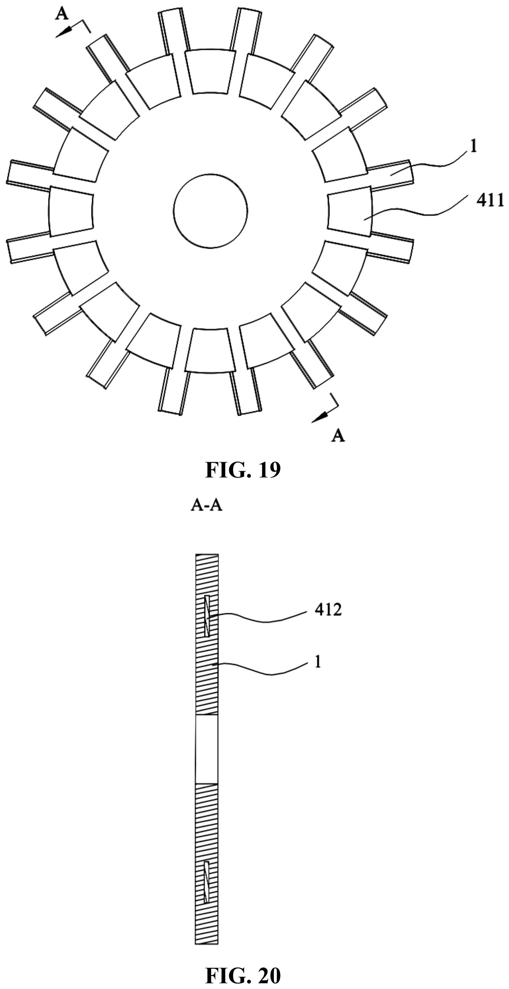

Optionally, as shown in FIGS. 17, 19, and 20, the inner-ring magnetic-flux conducting disc 41 further includes multiple inner-ring connecting portions 412, and an inner-ring connecting portion 412 connects two adjacent inner-ring filling portions 411. The provision of the inner-ring connecting portions 412 enables the inner-ring magnetic-flux conducting disc 41 to form an integral structure, which can not only make the structure more robust but also facilitate the connection with the rotor carrier 1. Each inner-ring connecting portion 412 extends along the circumferential direction of the rotor carrier 1 and is embedded into the rotor carrier 1. Optionally, during the manufacturing of the rotor, the inner-ring magnetic-flux conducting disc 41 may be processed first, and the inner-ring magnetic-flux conducting disc 41 may be then used as an insert and integrally molded with the rotor carrier 1.

For the rotor of the full-magnetic steel solution (in which the mounting slot 11 is completely filled with the magnetic steel unit 3), the distance between two circumferentially adjacent magnetic steels is smaller, so a clamp of a magnetizing device cannot simultaneously clamp the two adjacent magnetic steels. As a result, multiple magnetic steels of the rotor cannot be overall magnetized.

In the present application, as shown in FIGS. 17 and 18, the two adjacent inner-ring filling portions 411 protrude from two sides of the inner-ring connecting portion 412, respectively, so that two adjacent inner-ring magnetic steel assemblies 31 are located at two ends of the rotor carrier 1 along the axial direction of the rotor carrier 1, respectively. With the positional arrangement of the preceding inner-ring filling portions 411, the two circumferentially adjacent inner-ring magnetic steel assemblies 31 are located on two sides of the rotor carrier 1, respectively. Therefore, on the same side of the rotor carrier 1, inner-ring magnetic steel assemblies 31 that need to be magnetized are spaced apart, leaving a sufficient room for the clamp of the magnetizing device. As a result, the multiple inner-ring magnetic steel assemblies 31 can be overall magnetized, improving manufacturing efficiency of the rotor of an axial flux motor.

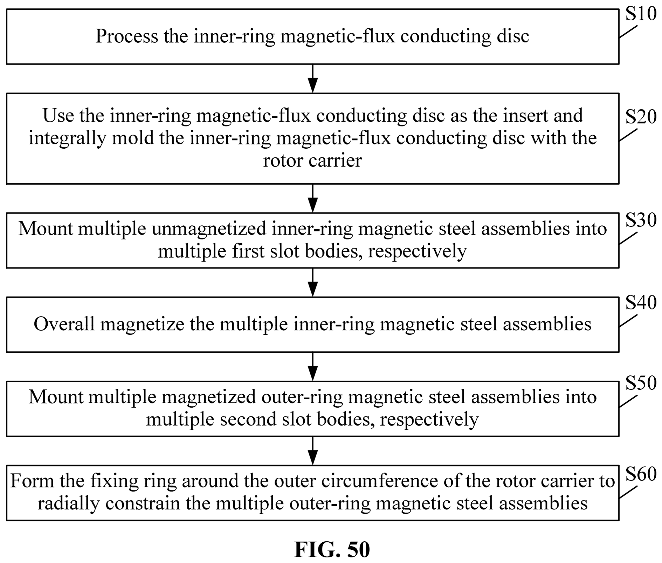

As shown in FIG. 50, this embodiment further provides a method for manufacturing a rotor of an axial flux motor for manufacturing the preceding rotor. The method includes the steps below.

In S10, the inner-ring magnetic-flux conducting disc 41 is processed.

In S20, the inner-ring magnetic-flux conducting disc 41 is used as the insert and integrally molded with the rotor carrier 1, where the two adjacent inner-ring filling portions 411 of the inner-ring magnetic-flux conducting disc 41 are located at the two ends of the rotor carrier 1 along the axial direction, respectively.

In S30, multiple unmagnetized inner-ring magnetic steel assemblies 31 are mounted into multiple first slot bodies 111, respectively.

In S40, the multiple inner-ring magnetic steel assemblies 31 are overall magnetized.

In S50, multiple magnetized outer-ring magnetic steel assemblies 32 are mounted into multiple second slot bodies 112, respectively.

In S60, the fixing ring 2 is formed around the outer circumference of the rotor carrier 1 to radially constrain the multiple outer-ring magnetic steel assemblies 32.

In the method for manufacturing a rotor of an axial flux motor in this embodiment, the inner-ring magnetic-flux conducting disc 41 is provided to enable the inner-ring filling portions 411 to form the "virtual magnetic steels", thereby reducing the amount of magnetic steel used and lowering the manufacturing cost of the rotor. Moreover, the two adjacent inner-ring filling portions 411 are located at the two ends of the rotor carrier 1 along the axial direction, respectively, so that the two adjacent inner-ring magnetic steel assemblies 31 are located at the two ends of the rotor carrier 1 along the axial direction, respectively. As a result, the inner-ring magnetic steel assemblies 31 on the same side of the rotor carrier 1 are spaced farther apart, allowing the inner-ring magnetic steel assemblies 31 to be overall magnetized, thereby improving the production efficiency of the rotor, and lowering the manufacturing cost of the rotor.

### Embodiment eight

This embodiment provides a rotor of an axial flux motor, which differs from embodiment seven in the configuration of the magnetic-flux conducting disc assembly and the mounting manner of the magnetic steel unit 3, as described in detail below.

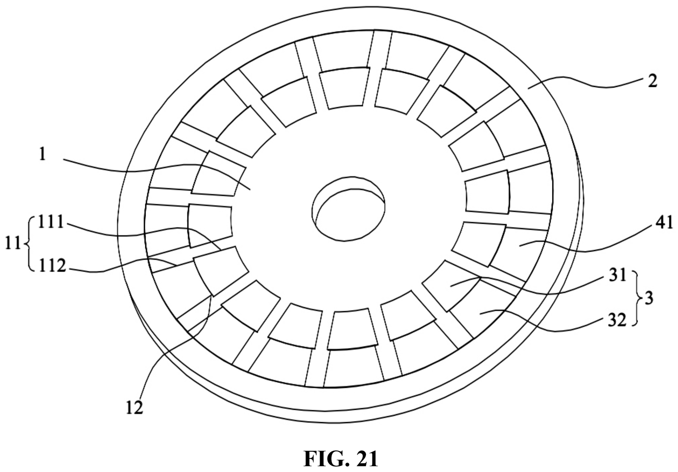

As shown in FIGS. 21 to 23, in this embodiment, the rotor of an axial flux motor also includes the rotor carrier 1, the magnetic-flux conducting disc assembly, and the multiple magnetic steel units 3. The rotor carrier 1 is circumferentially formed with the multiple mounting slots 11. The mounting slot 11 includes the first slot body 111 and the second slot body 112, and the magnetic steel unit 3 includes the inner-ring magnetic steel assembly 31 and the outer-ring magnetic steel assembly 32, where the inner-ring magnetic steel assembly 31 is accommodated in the first slot body 111, and the outer-ring magnetic steel assembly 32 is accommodated in the second slot body 112. The magnetic-flux conducting disc assembly includes an outer-ring magnetic-flux conducting disc 42. The outer-ring magnetic-flux conducting disc 42 includes multiple outer-ring filling portions 421. Each outer-ring filling portion 421 fills part of the second slot body 112. The outer-ring magnetic steel assembly 32 fills the remaining space of the second slot body 112, and the inner-ring magnetic steel assembly 31 is mounted into the first slot body 111. In this embodiment, the outer-ring filling portions 421 serve as filling portions of the magnetic-flux conducting disc assembly. The outer-ring filling portions 421 are provided to form "virtual magnetic steels", thereby reducing the amount of magnetic steel used in the magnetic steel units 3 and lowering the manufacturing cost of the rotor. Optionally, the outer-ring magnetic steel assembly 32 can be fixed in the second slot body 112 by bonding or magnetically attracting the outer-ring filling portion 421, which is not specifically limited herein.

It is to be understood that, in this embodiment, as shown in FIG. 21, the limiting portion 12 is also provided between the first slot body 111 and the second slot body 112, thereby radially constraining the inner-ring magnetic steel assembly 31. The specific configuration of the limiting portion 12 is the same as that in embodiment seven and thereby is not repeated herein.

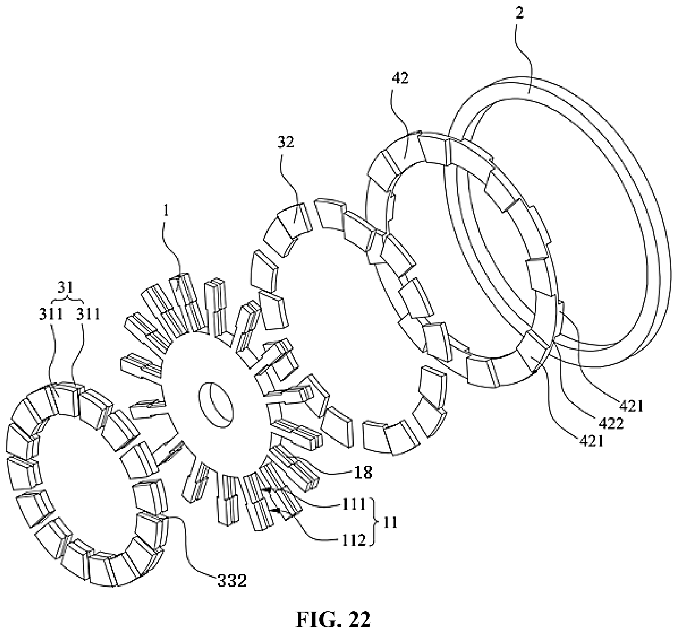

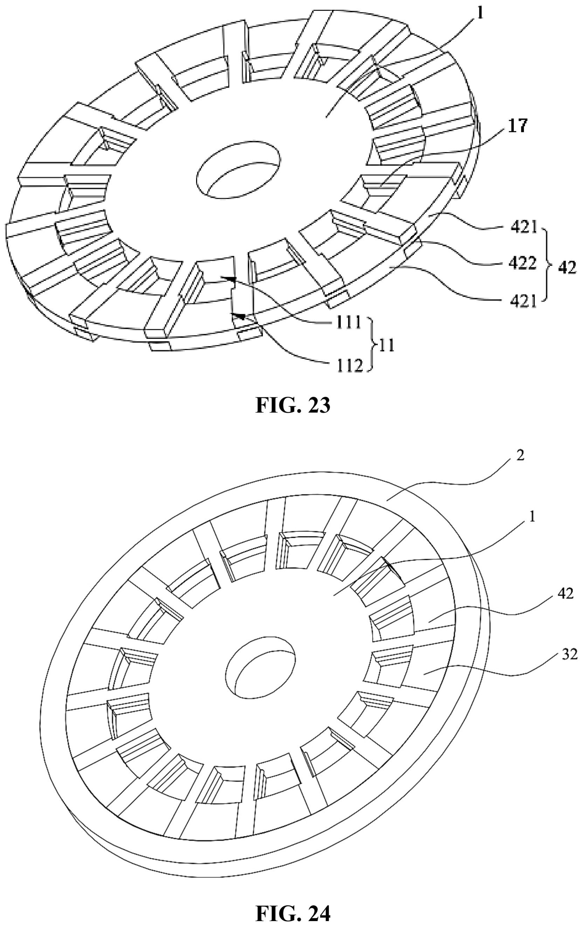

Optionally, as shown in FIGS. 22 and 23, the outer-ring magnetic-flux conducting disc 42 further includes multiple outer-ring connecting portions 422 that are connected to the rotor carrier 1, and an outer-ring connecting portion 422 connects two adjacent outer-ring filling portions 421. The provision of the outer-ring connecting portions 422 enables the outer-ring magnetic-flux conducting disc 42 to form an integral structure, which can not only make the structure more robust but also facilitate the connection with the rotor carrier 1. Each outer-ring connecting portion 422 extends along the circumferential direction of the rotor carrier 1 and is embedded outside the rotor carrier 1. Optionally, during the manufacturing of the rotor, the outer-ring magnetic-flux conducting disc 42 may be processed first, and the outer-ring magnetic-flux conducting disc 42 may be then used as an insert and integrally molded with the rotor carrier 1.

For the rotor of the full-magnetic steel solution (in which the mounting slot 11 is completely filled with the magnetic steel unit 3), the distance between the two circumferentially adjacent magnetic steels is smaller, so the clamp of the magnetizing device cannot simultaneously clamp the two adjacent magnetic steels. As a result, the multiple magnetic steels of the rotor cannot be overall magnetized.

In the present application, as shown in FIGS. 22 and 23, the two adjacent outer-ring filling portions 421 protrude from two sides of the outer-ring connecting portion 422, respectively, so that two adjacent outer-ring magnetic steel assemblies 32 are located at two ends of the rotor carrier 1 along the axial direction of the rotor carrier 1, respectively. With the positional arrangement of the preceding outer-ring filling portions 421, the two circumferentially adjacent outer-ring magnetic steel assemblies 32 are located on two sides of the rotor carrier 1, respectively. Therefore, on the same side of the rotor carrier 1, outer-ring magnetic steel assemblies 32 that need to be magnetized are spaced apart, leaving a sufficient room for the clamp of the magnetizing device. As a result, the multiple outer-ring magnetic steel assemblies 32 can be overall magnetized, improving the manufacturing efficiency of the rotor of an axial flux motor.

As shown in FIG. 22, one of the sidewall of the first slot body 111 parallel to the radial direction and the sidewall of the inner-ring magnetic steel assembly 31 is provided with a fourth protrusion 18, the other one is formed with a fourth groove 332, and the fourth protrusion 18 engages with the fourth groove 332. The engagement of the fourth protrusion 18 with the fourth groove 332 allows the rotor carrier 1 to axially limit the inner-ring magnetic steel assembly 31, thereby making the overall structure of the rotor more robust. In this embodiment, the sidewall of the first slot body 111 parallel to the radial direction is provided with the fourth protrusion 18, and the sidewall of the inner-ring magnetic steel assembly 31 is formed with the fourth groove 332.

Optionally, as shown in FIG. 22, the inner-ring magnetic steel assembly 31 includes two inner sub-segments 311 arranged along the radial direction. Therefore, during the mounting of the inner-ring magnetic steel assembly 31, the two inner sub-segments 311 can be mounted into the first slot body 111 from two ends of the rotor carrier 1 along the axial direction, respectively, thereby greatly improving the convenience of mounting the inner-ring magnetic steel assembly 31. After being mounted into the second slot body 112, the two inner sub-segments 311 are magnetically attracted to each other, and in cooperation with the fourth groove 332 and the fourth protrusion 18, mount and secure the inner-ring magnetic steel assembly 31. In addition, configuring the inner-ring magnetic steel assembly 31 to be composed of the two inner sub-segments 311 arranged axially can also axially split the induced eddy current loop of the rotor, thereby reducing the eddy current losses of the rotor.

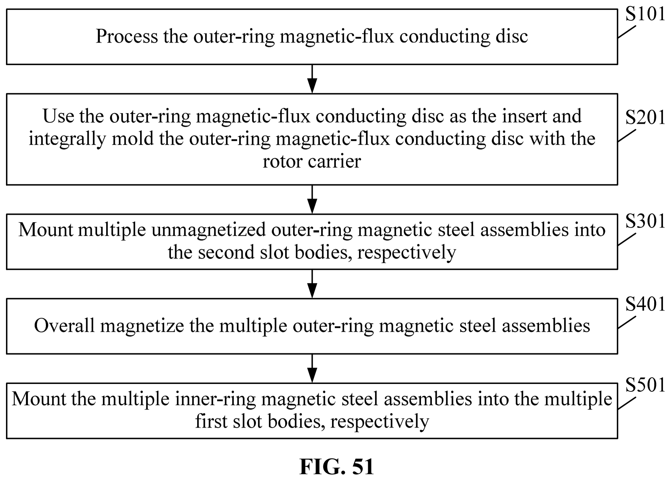

As shown in FIG. 51, this embodiment further provides a method for manufacturing a rotor of an axial flux motor for manufacturing the preceding rotor. The method includes the steps below.

In S101, the outer-ring magnetic-flux conducting disc 42 is processed.

In S201, the outer-ring magnetic-flux conducting disc 42 is used as the insert and integrally molded with the rotor carrier 1, where the two adjacent outer-ring filling portions 421 of the outer-ring magnetic-flux conducting disc 42 are located at the two ends of the rotor carrier 1 along the axial direction, respectively.

In S301, multiple unmagnetized outer-ring magnetic steel assemblies 32 are mounted into the second slot bodies 112, respectively.

In S401, the multiple outer-ring magnetic steel assemblies 32 are overall magnetized.

In S501, the multiple inner-ring magnetic steel assemblies 31 are mounted into the multiple first slot bodies 111, respectively.

In the method for manufacturing a rotor of an axial flux motor in this embodiment, the outer-ring magnetic-flux conducting disc 42 is provided to enable the outer-ring filling portions 421 to form the "virtual magnetic steels", thereby reducing the amount of magnetic steel used and lowering the manufacturing cost of the rotor. Moreover, the two adjacent outer-ring filling portions 421 are located at the two ends of the rotor carrier 1 along the axial direction, respectively, so that the two adjacent outer-ring magnetic steel assemblies 32 are located at the two ends of the rotor carrier 1 along the axial direction, respectively. As a result, the outer-ring magnetic steel assemblies 32 on the same side of the rotor carrier 1 are spaced farther apart, allowing the outer-ring magnetic steel assemblies 32 to be overall magnetized, thereby improving the production efficiency of the rotor, and lowering the manufacturing cost of the rotor.

Optionally, as shown in FIG. 24, before the multiple outer-ring magnetic steel assemblies 32 are overall magnetized in S401, the method for manufacturing a rotor of an axial flux motor in this embodiment further includes the step below.

In S35, a tightening band is wound around the outer circumference of the rotor carrier 1 to mold the fixing ring 2 that radially blocks the magnetic steel units 3.

The rotor is generally assembled as follows: the multiple magnetic steel units are magnetized separately, the magnetized magnetic steel units are mounted into the mounting slots, respectively, and the fixing ring is formed around the outer circumference of the rotor carrier so that the fixing ring radially constrains the multiple magnetic steel units. Since the magnetic steel units are in a magnetized state, an excessively high temperature during formation of the fixing ring would cause demagnetization of the magnetic steel units. Therefore, the forming temperature of the fixing ring is limited, and the pre-tightening force of the formed fixing ring is also limited, which results in a limited radial constraining force that the fixing ring can provide for the magnetic steel units, making it unable to satisfy the high-speed operation of the rotor.

In the method for manufacturing a rotor of an axial flux motor in this embodiment, the fixing ring 2 is formed before the outer-ring magnetic steel assemblies 32 are magnetized so that the forming temperature of the fixing ring 2 is not limited. As a result, a higher pre-tightening force, that is, a higher radial constraint, can be provided to the magnetic steel units 3, thereby enabling the rotor and the motor to satisfy the high-speed applications. The tightening band may be made of a carbon-fiber material.

### Embodiment nine

This embodiment provides a rotor of an axial flux motor, which differs from embodiment seven and embodiment eight in the configuration of the magnetic-flux conducting disc assembly and the configuration of the magnetic steel unit 3, as described in detail below.

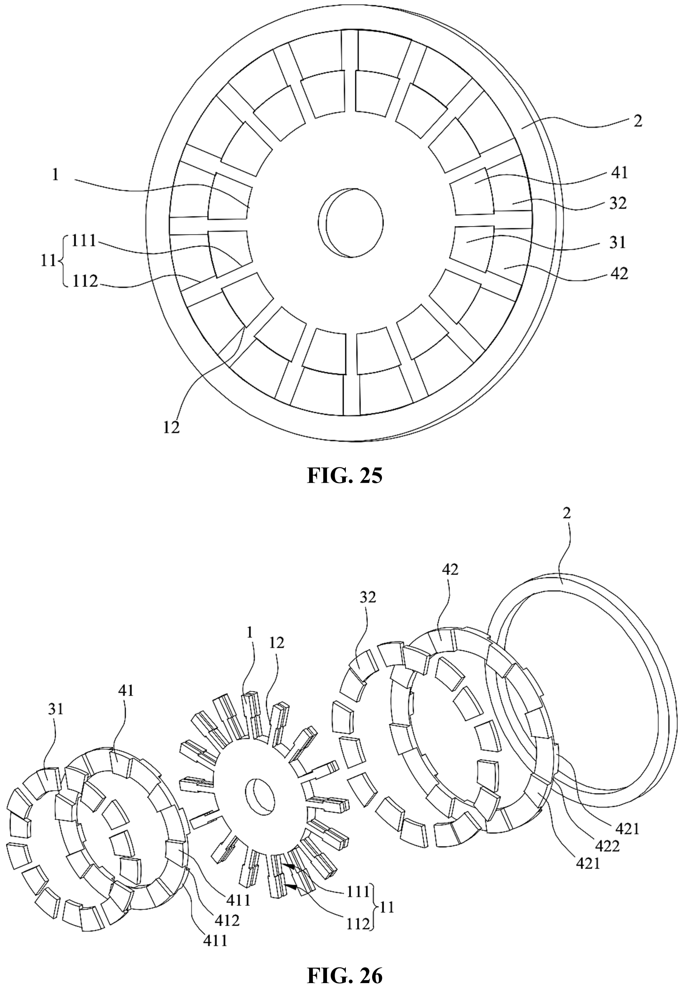

As shown in FIGS. 25 to 29, in this embodiment, the rotor of an axial flux motor also includes the rotor carrier 1, the magnetic-flux conducting disc assembly, and the multiple magnetic steel units 3. The rotor carrier 1 is circumferentially formed with the multiple mounting slots 11. The mounting slot 11 includes the first slot body 111 and the second slot body 112, and the magnetic steel unit 3 includes the inner-ring magnetic steel assembly 31 and the outer-ring magnetic steel assembly 32, where the inner-ring magnetic steel assembly 31 is accommodated in the first slot body 111, and the outer-ring magnetic steel assembly 32 is accommodated in the second slot body 112. The magnetic-flux conducting disc assembly includes the inner-ring magnetic-flux conducting disc 41 and the outer-ring magnetic-flux conducting disc 42. The inner-ring magnetic-flux conducting disc 41 includes the multiple inner-ring filling portions 411, and the outer-ring magnetic-flux conducting disc 42 includes the multiple outer-ring filling portions 421. An inner-ring filling portion 411 and an outer-ring filling portion 421 together form a filling portion. In this embodiment, the inner-ring filling portion 411 and the inner-ring magnetic steel assembly 31 fill the first slot body 111, and the outer-ring filling portion 421 and the outer-ring magnetic steel assembly 32 fill the second slot body 112. This configuration in this embodiment makes it easier to set the total volume of the magnetic steel unit 3 to 50% of the volume of the mounting slot 11.

In this embodiment, the inner-ring magnetic-flux conducting disc 41 also includes the multiple inner-ring connecting portions 412, and the inner-ring connecting portion 412 connects the two adjacent inner-ring filling portions 411. For the material, structure, and other details of the inner-ring magnetic-flux conducting disc 41, reference may be made to embodiment seven, which are not repeated herein. The outer-ring magnetic-flux conducting disc 42 includes the multiple outer-ring connecting portions 422, and the outer-ring connecting portion 422 connects the two adjacent outer-ring filling portions 421. For the material, structure, and other details of the outer-ring magnetic-flux conducting disc 42, reference may be made to embodiment eight, which are not repeated herein.

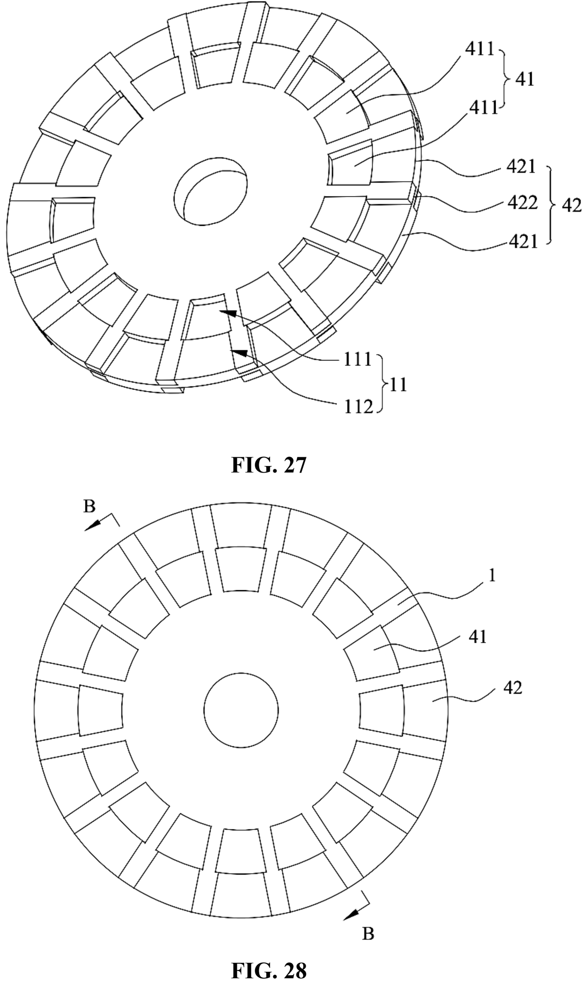

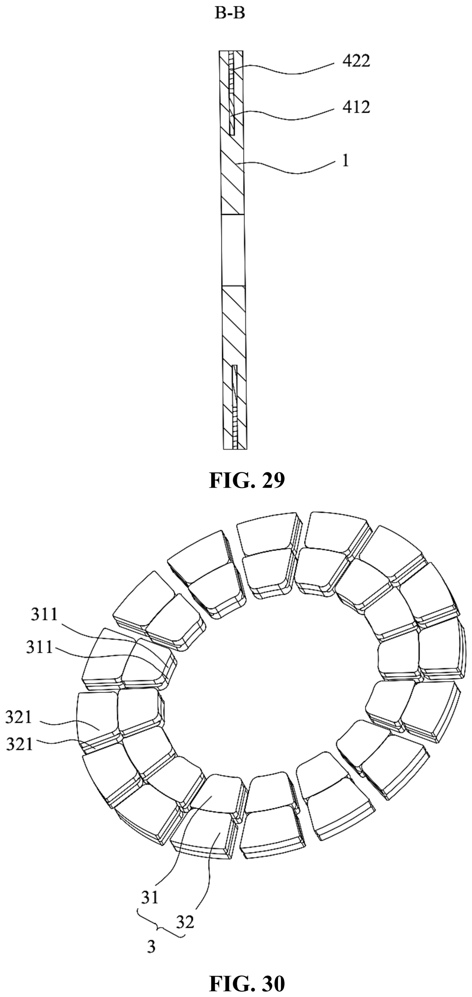

In this embodiment, during the manufacturing of the rotor, the inner-ring magnetic-flux conducting disc 41 and the outer-ring magnetic-flux conducting disc 42 may be first formed by machining. The inner-ring magnetic-flux conducting disc 41 and the outer-ring magnetic-flux conducting disc 42 are simultaneously used as inserts and integrally molded with the rotor carrier 1. After formation, as shown in FIGS. 28 and 29, the inner-ring connecting portions 412 and the outer-ring connecting portions 422 are embedded into the rotor carrier 1.

It is to be understood that, in this embodiment, as shown in FIG. 25, the limiting portion 12 is also provided between the first slot body 111 and the second slot body 112, thereby radially constraining the inner-ring magnetic steel assembly 31. The specific configuration of the limiting portion 12 is the same as that in embodiment seven and thereby is not repeated herein.

In addition, in this embodiment, the sidewall of the inner-ring magnetic steel assembly 31 and the sidewall of the first slot body 111 may be free of grooves and bosses. The inner-ring magnetic steel assembly 31 can be fixedly mounted into the first slot body 111 by magnetically attracting to the inner-ring filling portion 411, bonding to the rotor carrier 1, or other manners. Similarly, the sidewall of the outer-ring magnetic steel assembly 32 and the sidewall of the second slot body 112 are also free of grooves and bosses. The outer-ring magnetic steel assembly 32 can be fixedly mounted into the second slot body 112 by magnetically attracting to the outer-ring filling portion 421, bonding to the rotor carrier 1, or other manners.

This embodiment further provides a method for manufacturing a rotor of an axial flux motor for manufacturing the preceding rotor. The method includes the steps below.

In S1011, the inner-ring magnetic-flux conducting disc 41 and the outer-ring magnetic-flux conducting disc 42 are processed separately.

In S2011, the inner-ring magnetic-flux conducting disc 41 and the outer-ring magnetic-flux conducting disc 42 are used as the inserts and integrally molded with the rotor carrier 1, where the two adjacent inner-ring filling portions 411 of the inner-ring magnetic-flux conducting disc 41 are located at the two ends of the rotor carrier 1 along the axial direction, respectively, and the two adjacent outer-ring filling portions 421 of the outer-ring magnetic-flux conducting disc 42 are located at the two ends of the rotor carrier 1 along the axial direction, respectively.

In S3011, the multiple unmagnetized inner-ring magnetic steel assemblies 31 are mounted into the multiple first slot bodies 111, respectively, and the multiple unmagnetized outer-ring magnetic steel assemblies 32 are mounted into the multiple second slot bodies 112, respectively.

In S351, the tightening band is wound around the outer circumference of the rotor carrier 1 to mold the fixing ring 2 that radially blocks the outer-ring magnetic steel assemblies 32.

In S4011, the multiple inner-ring magnetic steel assemblies 31 and the multiple outer-ring magnetic steel assemblies 32 are overall magnetized.

In the method for manufacturing a rotor of an axial flux motor in this embodiment, the inner-ring magnetic-flux conducting disc 41 and the outer-ring magnetic-flux conducting disc 42 are provided to enable the inner-ring filling portions 411 to form the "virtual magnetic steels" and enable the outer-ring filling portions 421 to form the "virtual magnetic steels", thereby reducing the amount of magnetic steel used and lowering the manufacturing cost of the rotor. Moreover, the two adjacent inner-ring filling portions 411 are located at the two ends of the rotor carrier 1 along the axial direction, respectively, so that the two adjacent inner-ring magnetic steel assemblies 31 are located at the two ends of the rotor carrier 1 along the axial direction, respectively, and the two adjacent outer-ring filling portions 421 are located at the two ends of the rotor carrier 1 along the axial direction, respectively, so that the two adjacent outer-ring magnetic steel assemblies 32 are located at the two ends of the rotor carrier 1 along the axial direction, respectively. As a result, the inner-ring magnetic steel assemblies 31 on the same side of the rotor carrier 1 are spaced farther apart, and the outer-ring magnetic steel assemblies 32 on the same side of the rotor carrier 1 are also spaced farther apart, allowing the inner-ring magnetic steel assemblies 31 and the outer-ring magnetic steel assemblies 32 to be overall magnetized, thereby improving the production efficiency of the rotor, and lowering the manufacturing cost of the rotor. In addition, the fixing ring 2 is formed before the magnetic steel units 3 are magnetized so that the forming temperature of the fixing ring 2 is not limited. As a result, the higher pre-tightening force, that is, the higher radial constraint, can be provided to the magnetic steel units 3, thereby enabling the rotor and the motor to satisfy the high-speed applications. The tightening band may be made of the carbon-fiber material.

The rotor of an axial flux motor in the present application has the advantages below.
(1) By employing the magnetic-flux conducting disc assembly made of the magnetic-flux conducting material to fill part of the mounting slots, "virtual magnetic steels" are formed at the multiple mounting slots, respectively, and the magnetic steel units only need to fill the remaining space of the mounting slots, thereby reducing the overall amount of magnetic steel used in the rotor and thus lowering the manufacturing cost of the rotor.
(2) The two adjacent inner-ring filling portions are located at the two ends of the rotor carrier along the axial direction so that the two circumferentially adjacent inner-ring magnetic steel assemblies are located on the two sides of the rotor carrier, respectively. Therefore, on the same side of the rotor carrier, the inner-ring magnetic steel assemblies that need to be magnetized are spaced apart, leaving the sufficient room for the clamp of the magnetizing device. As a result, the multiple inner-ring magnetic steel assemblies can be overall magnetized, improving the manufacturing efficiency of the rotor of an axial flux motor.
(3) The two adjacent outer-ring filling portions are located at the two ends of the rotor carrier along the axial direction so that the two circumferentially adjacent outer-ring magnetic steel assemblies are located on the two sides of the rotor carrier, respectively. Therefore, on the same side of the rotor carrier, the outer-ring magnetic steel assemblies that need to be magnetized are spaced apart, leaving the sufficient room for the clamp of the magnetizing device. As a result, the multiple outer-ring magnetic steel assemblies can be overall magnetized, improving the manufacturing efficiency of the rotor of an axial flux motor.

### Embodiment ten

This embodiment provides a rotor of an axial flux motor and an axial flux motor. The axial flux motor includes at least one stator and the preceding rotor of an axial flux motor. In some embodiments, the axial flux motor may also include two stators and the preceding rotor of an axial flux motor. In some embodiments, the axial flux motor may also include two preceding rotors of an axial flux motor and a rotor. The rotor of an axial flux motor in this embodiment reduces the amount of magnetic steel used to a large extent while sacrificing only a small amount of the magnetic flux, thereby lowering the manufacturing cost of the rotor. The axial flux motor can lower the production costs by employing the preceding rotor.

As shown in FIG. 2, the rotor of an axial flux motor includes a rotor carrier 1, multiple magnetic steel units 3, and a fixing ring 2. The rotor carrier 1 has a circular contour and is circumferentially formed with multiple mounting slots 11. Optionally, the multiple mounting slots 11 are uniformly distributed around the circumference of the rotor carrier 1. Each magnetic steel unit 3 is mounted into a respective mounting slot 11. The magnetic steel unit 3 includes an inner-ring magnetic steel assembly 31 and an outer-ring magnetic steel assembly 32 that are arranged radially, the inner-ring magnetic steel assembly 31 is axially divided into at least one inner sub-segment 311, and the outer-ring magnetic steel assembly 32 is axially divided into at least one outer sub-segment 321; in the same magnetic steel unit 3, at least one of the inner sub-segment 311 and the outer sub-segment 321 is a magnetic steel, and the others are magnetic flux conductors.

In the rotor in this embodiment, each magnetic steel unit 3 is segmented both radially and axially, and in each magnetic steel unit 3, at least one sub-segment is made of a magnetic steel, while the other sub-segments are made of magnetic flux conductors. Since the magnetic flux conductors have very low magnetic reluctance, the magnetic flux conductors effectively form "virtual magnetic steels", thereby greatly reducing the amount of magnetic steel used while sacrificing only a small amount of the magnetic flux. Because the cost of a magnetic flux conductor is far lower than that of a magnetic steel, the manufacturing cost of the rotor is thereby reduced.

In this embodiment, the mounting slot 11 penetrates through the rotor carrier 1 to the circumferential surface of the rotor carrier 1, thereby facilitating the mounting of the outer-ring magnetic steel assembly 32.

Optionally, in each magnetic steel unit 3, the volume of the magnetic steel accounts for 50% of the total volume of the magnetic steel unit 3. It is to be understood that, as the amount of magnetic steel used is reduced, the magnetic flux at each magnetic steel unit 3, as well as the torque and power of the motor manufactured using the rotor all decrease to some extent. Experimental verification shows that when the amount of magnetic steel used is reduced by half, the magnetic flux at each magnetic steel unit 3 can be maintained at 80% to 85% of that in a full-magnetic steel solution (that is, the entire magnetic steel unit 3 is made of the magnetic steel), and the torque and power of the motor manufactured using the rotor can both reach 80% to 90% of those of the full-magnetic steel solution. By controlling the volume ratio of the magnetic steel relative to the magnetic steel unit 3, the amount of magnetic steel used can be greatly reduced while only a small amount of the magnetic flux is sacrificed, thereby lowering the manufacturing cost of the rotor and the axial flux motor. Optionally, the magnetic flux conductor is made of a soft magnetic material such as silicon steel, or another material having high magnetic permeability. Optionally, the rotor carrier 1 may be made of a non-magnetic-flux conducting material.

In some embodiments, as shown in FIG. 3, the inner-ring magnetic steel assembly 31 is axially divided into two inner sub-segments 311, and the outer-ring magnetic steel assembly 32 is not segmented. In practice, depending on actual requirements, only one of the inner sub-segments 311 may be made of magnetic steel, or only the two inner sub-segments 311 may be made of magnetic steel, or only the outer-ring magnetic steel assembly 32 may be made of magnetic steel.

In this embodiment, as shown in FIG. 30, the inner-ring magnetic steel assembly 31 is axially divided into the two inner sub-segments 311, one of which is made of a magnetic flux conductor, and the other one of which is made of magnetic steel. The outer-ring magnetic steel assembly 32 is axially divided into two outer sub-segments 321, one of which is made of a magnetic flux conductor, and the other one of which is made of magnetic steel. This configuration facilitates the setting of the volume ratio of the magnetic steel within a single magnetic steel unit 3 to 50%, thereby enabling the rotor to obtain a higher magnetic flux at a lower cost. It is to be understood that, in other embodiments, the material of an inner sub-segment 311 and the material of an outer sub-segment 321 may be flexibly adjusted according to the actual requirements, so as to adjust the volume ratio of the magnetic steel relative to the entire magnetic steel unit 3, which are not specifically limited herein. Optionally, the two inner sub-segments 311 of the inner-ring magnetic steel assembly 31 may be magnetically attracted to each other or bonded by a magnetic-flux conducting adhesive. The two outer sub-segments 321 of the outer-ring magnetic steel assembly 32 may be magnetically attracted to each other or bonded by the magnetic-flux conducting adhesive.

For the rotor in the full-magnetic steel solution (that is, the entire magnetic steel unit 3 is made of the magnetic steel), the distance between two circumferentially adjacent magnetic steels is smaller so that the clamp of the magnetizing device cannot simultaneously clamp the two adjacent magnetic steels. As a result, multiple magnetic steels of the rotor cannot be overall magnetized, which increases the manufacturing difficulty of the rotor and reduces the manufacturing efficiency of the rotor.

In some embodiments, on the same side of the rotor carrier 1, one of two circumferentially adjacent inner sub-segments 311 is a magnetic steel, and the other one is a magnetic flux conductor. Therefore, on the same side of the rotor carrier 1, inner sub-segments 311 that need to be magnetized (that is, magnetic steels) are spaced apart, thereby increasing the distance between two adjacent magnetic steels. As a result, the clamp of the magnetizing device can simultaneously overall magnetize magnetic steels of multiple inner-ring magnetic steel assemblies 31, thereby reducing the manufacturing difficulty of the rotor and improving the manufacturing efficiency of the rotor.

In some embodiments, on the same side of the rotor carrier 1, one of two circumferentially adjacent outer sub-segments 321 is a magnetic steel, and the other one is a magnetic flux conductor. Therefore, on the same side of the rotor carrier 1, outer sub-segments 321 that need to be magnetized (that is, magnetic steels) are spaced apart, thereby increasing the distance between two adjacent magnetic steels. As a result, the clamp of the magnetizing device can simultaneously overall magnetize magnetic steels of multiple outer-ring magnetic steel assemblies 32, thereby reducing the manufacturing difficulty of the rotor and improving the manufacturing efficiency of the rotor.

In some embodiments, on the same side of the rotor carrier 1, one of the two circumferentially adjacent inner sub-segments 311 is the magnetic steel, and the other one is the magnetic flux conductor. Moreover, on the same side of the rotor carrier 1, one of the two circumferentially adjacent outer sub-segments 321 is the magnetic steel, and the other one is the magnetic flux conductor. In this embodiment, the magnetic steels of the inner-ring magnetic steel assemblies 31 and the magnetic steels of the outer-ring magnetic steel assemblies 32 can be simultaneously overall magnetized, thereby further improving the manufacturing efficiency of the rotor.

In some embodiments, after the inner-ring magnetic steel assemblies 31 and the outer-ring magnetic steel assemblies 32 are mounted onto the rotor carrier 1, the formed fixing ring 2 is sleeved onto the rotor carrier 1, thereby radially constraining the multiple magnetic steel units 3 to overcome the centrifugal forces generated by the magnetic steel units 3 during rotation.

In other approaches, after the inner-ring magnetic steel assemblies 31 and the outer-ring magnetic steel assemblies 32 are mounted onto the rotor carrier 1, the fixing ring 2 is directly formed on the rotor carrier 1 by a molding process. Since the magnetic steel units 3 are in the magnetized state, the excessively high temperature during the formation of the fixing ring 2 would cause the demagnetization of the magnetic steel units 3. Therefore, the forming temperature of the fixing ring 2 is limited, and the pre-tightening force of the formed fixing ring 2 is also limited, which results in the limited radial constraining force that the fixing ring 2 can provide for the magnetic steel units 3, making it unable to satisfy the high-speed operation of the rotor.

Optionally, in this embodiment, the fixing ring 2 is formed by curing multiple layers of carbon fiber wound around the rotor carrier 1 before the outer sub-segments 321 made of the magnetic steel are magnetized. Since the fixing ring 2 is formed before the magnetization of the magnetic steels, the forming temperature of the fixing ring 2 is not limited. Therefore, the higher pre-tightening force, that is, the higher radial constraint, can be provided to the magnetic steel units 3, thereby enabling the rotor and the motor to satisfy the high-speed applications.

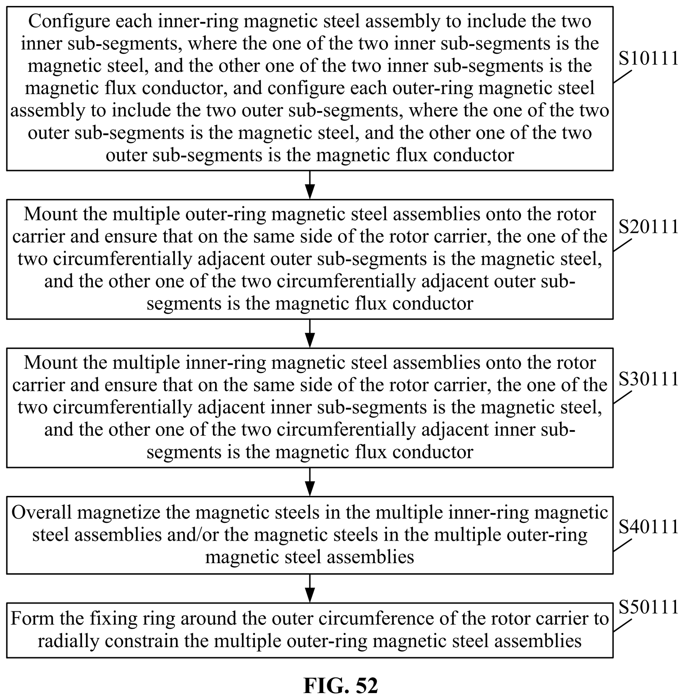

As shown in FIG. 52, this embodiment further provides a method for manufacturing a rotor of an axial flux motor for manufacturing the preceding rotor. The method for manufacturing a rotor of an axial flux motor includes the steps below.

In S10111, each inner-ring magnetic steel assembly 31 is configured to include the two inner sub-segments 311, where one of the two inner sub-segments 311 is the magnetic steel, and the other one is the magnetic flux conductor, and each outer-ring magnetic steel assembly 32 is configured to include the two outer sub-segments 321, where the one of the two outer sub-segments 321 is the magnetic steel, and the other one of the two outer sub-segments 321 is the magnetic flux conductor.

In S20111, the multiple outer-ring magnetic steel assemblies 32 are mounted onto the rotor carrier 1, and it is ensured that on the same side of the rotor carrier 1, one of the two circumferentially adjacent outer sub-segments 321 is the magnetic steel, and the other one is the magnetic flux conductor.

In S30111, the multiple inner-ring magnetic steel assemblies 31 are mounted onto the rotor carrier 1, and it is ensured that on the same side of the rotor carrier 1, the one of the two circumferentially adjacent inner sub-segments 311 is the magnetic steel, and the other one is the magnetic flux conductor.

In S40111, the magnetic steels in the multiple inner-ring magnetic steel assemblies 31 and/or the magnetic steels in the multiple outer-ring magnetic steel assemblies 32 are overall magnetized.

In S50111, the fixing ring 2 is formed around the outer circumference of the rotor carrier 1 to radially constrain the multiple outer-ring magnetic steel assemblies 32.

In the method for manufacturing a rotor of an axial flux motor in this embodiment, the inner-ring magnetic steel assemblies 31 and the outer-ring magnetic steel assemblies 32 are each composed of two sub-segments. Moreover, on the same side of the rotor carrier 1, the magnetic steels of the inner-ring magnetic steel assemblies 31 that need to be magnetized are spaced apart, and the magnetic steels of the outer-ring magnetic steel assemblies 32 that need to be magnetized are spaced apart. As a result, the inner-ring magnetic steel assemblies 31 and/or the outer-ring magnetic steel assemblies 32 can be overall magnetized, thereby improving the manufacturing efficiency of the rotor.

Optionally, before the magnetic steels in the multiple outer-ring magnetic steel assemblies 32 are overall magnetized, carbon fiber is wound around the outer circumference of the rotor carrier 1 to mold the fixing ring 2. Since the fixing ring 2 is formed before the magnetization of the magnetic steels, the forming temperature of the fixing ring 2 is not limited. Therefore, the higher pre-tightening force, that is, the higher radial constraint, can be provided to the magnetic steel units 3, thereby enabling the rotor and the motor to satisfy the high-speed applications.

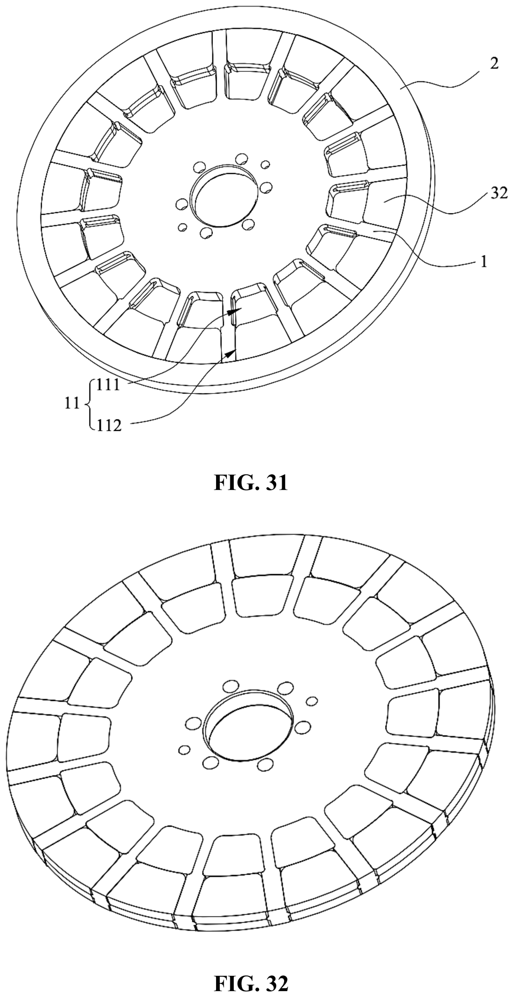

In some embodiments, a view of the rotor assembled by the following steps is shown in FIG. 31. The rotor is assembled as follows.
(1) The multiple outer-ring magnetic steel assemblies 32 (outer sub-segments 321 made of magnetic steel have not yet been magnetized in this stage) are mounted onto the rotor carrier 1.
(2) The carbon fiber is wound around the outer circumference of the rotor carrier 1 to mold the fixing ring 2.
(3) The multiple inner-ring magnetic steel assemblies 31 (inner sub-segments 311 made of magnetic steel have not yet been magnetized in this stage) are mounted onto the rotor carrier 3.
(4) The magnetic steels in the inner-ring magnetic steel assemblies 31 and the magnetic steels in the outer-ring magnetic steel assemblies 32 are overall magnetized.

In some embodiments, as shown in FIG. 32, the rotor may also be assembled as follows.
(1) The multiple inner-ring magnetic steel assemblies 31 and the multiple outer-ring magnetic steel assemblies 32 are mounted onto the rotor carrier 1 (all the magnetic steels have not yet been magnetized in this stage).
(2) The carbon fiber is wound around the outer circumference of the rotor carrier 1 to mold the fixing ring 2.
(3) The magnetic steels in the inner-ring magnetic steel assemblies 31 and the magnetic steels in the outer-ring magnetic steel assemblies 32 are overall magnetized.

### Embodiment eleven

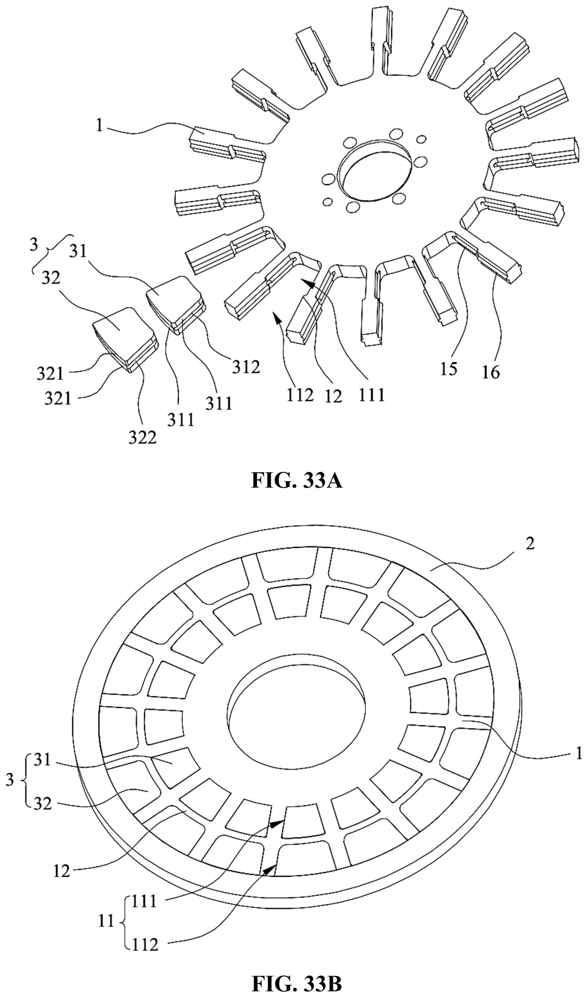

This embodiment provides a rotor of an axial flux motor, which shares the same inventive concept as embodiment ten. The similarities are not repeated herein. The difference lies in that the rotor carrier 1 is provided with limiting portions 12. As shown in FIGS. 2 and 33A, the rotor carrier 1 is provided with the multiple limiting portions 12, and each limiting portion 12 radially constrains a respective inner-ring magnetic steel assembly 31. The limiting portions 12 on the rotor carrier 1 can radially constrain inner-ring magnetic steel assemblies 31 to overcome centrifugal forces during rotation, and the fixing ring 2 can radially constrain outer-ring magnetic steel assemblies 32 to overcome centrifugal forces during rotation. The rotor radially constrains the magnetic steel units 3 in a portioned manner, that is, the rotor carrier 1 shares a portion of the centrifugal forces generated by the magnetic steel units 3. Therefore, under the condition that the constraining force of the fixing ring 2 is given, the outer-ring magnetic steel assemblies 32 rotating at a higher speed can be constrained, and the entire rotor can effectively constrain the magnetic steel units 3 rotating at a higher speed, so as to be adapted to the high-speed applications of the axial flux motor.

As shown in FIG. 33A, the mounting slot 11 includes a first slot body 111 and a second slot body 112 that are arranged radially from inside to outside. The inner-ring magnetic steel assembly 31 is mounted in the first slot body 111, and the outer-ring magnetic steel assembly 32 is mounted in the second slot body 112. The rotor carrier 1 forms the limiting portion 12 between the first slot body 111 and the second slot body 112, and at least part of the outer circumferential surface of the inner-ring magnetic steel assembly 31 abuts against the limiting portion 12. Configuring the mounting slot 11 to be composed of the two slot bodies not only is convenient to respectively support and limit the inner-ring magnetic steel assembly 31 and the outer-ring magnetic steel assembly 32, but also facilitates formation of the limiting portion 12 on the rotor carrier 1. In this embodiment, the first slot body 111 and the second slot body 112 are configured as fan-ring structures.

In some embodiments, as shown in FIGS. 2 and 33A, in this embodiment, the first slot body 111 communicates with the second slot body 112, and the outer-ring circumferential size of the first slot body 111 is larger than the inner-ring circumferential size of the second slot body 112, thereby forming the stepped limiting portion 12. The outer-ring circumferential surface of the inner-ring magnetic steel assembly 31 abuts against the stepped limiting portion 12 so that the limiting portion 12 radially constrains the inner-ring magnetic steel assembly 31. Optionally, along the circumferential direction, two ends of the outer ring of the first slot body 111 form the preceding step and abut against two ends of the circumferential surface of the inner-ring magnetic steel assembly 31, respectively, thereby making the force on the inner-ring magnetic steel assembly 31 more uniform and further ensuring that the inner-ring magnetic steel assembly 31 is effectively constrained during high-speed rotation of the rotor.

As shown in FIG. 33A, in this embodiment, one of the sidewall of the first slot body 111 parallel to the radial direction and the sidewall of the inner-ring magnetic steel assembly 31 is provided with a first protrusion 15, the other one is formed with a first groove 312, and the first protrusion 15 engages with the first groove 312. The engagement of the first protrusion 15 with the first groove 312 allows the rotor carrier 1 to axially limit the inner-ring magnetic steel assembly 31, thereby making the overall structure of the rotor more robust and preventing the rotor from coming apart during high-speed rotation. In this embodiment, two sidewalls of the first slot body 111 are provided with first protrusions 15, respectively, and two sidewalls of the inner-ring magnetic steel assembly 31 are formed with first grooves 312, respectively, so that each first protrusion 15 engages with a respective first groove 312.

Similarly, one of the sidewall of the second slot body 112 parallel to the radial direction and the sidewall of the outer-ring magnetic steel assembly 32 is provided with a second protrusion 16, the other one is formed with a second groove 322, and the second protrusion 16 engages with the second groove 322. The engagement of the second protrusion 16 with the second groove 322 allows the rotor carrier 1 to axially limit the outer-ring magnetic steel assembly 32, thereby further making the overall structure of the rotor more robust and preventing the rotor from coming apart during the high-speed rotation. In this embodiment, two sidewalls of the second slot body 112 are provided with second protrusions 16, respectively, and two sidewalls of the outer-ring magnetic steel assembly 32 are formed with second grooves 322, respectively, so that each second protrusion 16 engages with a respective second groove 322.

In some embodiments, as shown in FIG. 33B, in this embodiment, the first slot body 111 does not communicate with the second slot body 112, and the solid structure between the first slot body 111 and the second slot body 112 forms the limiting portion 12. Each limiting portion 12 extends along the same circumferential trajectory as the respective inner-ring magnetic steel assembly 31, that is, the outer-ring circumferential surface of the inner-ring magnetic steel assembly 31 fits the limiting portion 12 completely. This can radially constrain the inner-ring magnetic steel assembly 31 more stably and uniformly to overcome the centrifugal force during rotation, thereby making the structure of the rotor more stable and reliable during the high-speed rotation. As shown in FIG. 33B, the multiple limiting portions 12 together form a ring-shaped structure. This structure can improve the structural strength of the rotor carrier 1, thereby preventing the rotor from coming apart during the high-speed rotation.

The rotor of an axial flux motor in the present application has the advantages below.
(1) Each magnetic steel unit is segmented both radially and axially, and in each magnetic steel unit, at least one sub-segment is made of a magnetic steel, while the other sub-segments are made of magnetic flux conductors. Since the magnetic flux conductors have very low magnetic reluctance, the magnetic flux conductors effectively form "virtual magnetic steels", thereby greatly reducing the amount of magnetic steel used while sacrificing only a small amount of the magnetic flux. Because the cost of a magnetic flux conductor is far lower than that of a magnetic steel, the manufacturing cost of the rotor is thereby reduced.
(2) The inner sub-segments of the inner-ring magnetic steel assemblies and the outer sub-segments of the outer-ring magnetic steel assemblies are arranged reasonably so that the magnetic steels in the inner-ring magnetic steel assemblies and the magnetic steels in the outer-ring magnetic steel assemblies can be overall magnetized, thereby improving the manufacturing efficiency of the rotor.
(3) By setting the volume ratio of the magnetic steel relative to the magnetic steel unit to 50% within the same magnetic steel unit, the amount of magnetic steel used is reduced as much as possible while minimizing magnetic flux losses, thereby lowering the manufacturing cost of the rotor.

### Embodiment twelve

This embodiment provides a rotor of an axial flux motor and an axial flux motor. The axial flux motor includes at least one stator and the preceding rotor of an axial flux motor. In some embodiments, the axial flux motor may also include two stators and the preceding rotor of an axial flux motor. In some embodiments, the axial flux motor may also include two preceding rotors of an axial flux motor and a rotor. The rotor of an axial flux motor in this embodiment can reliably constrain a single magnetic steel even during high-speed rotation, thereby enabling the motor employing the rotor to achieve higher-speed rotation and satisfying the high-speed development of the motor.

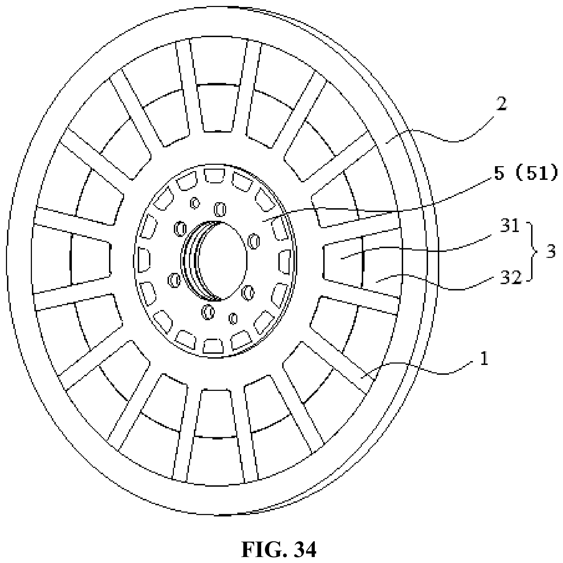

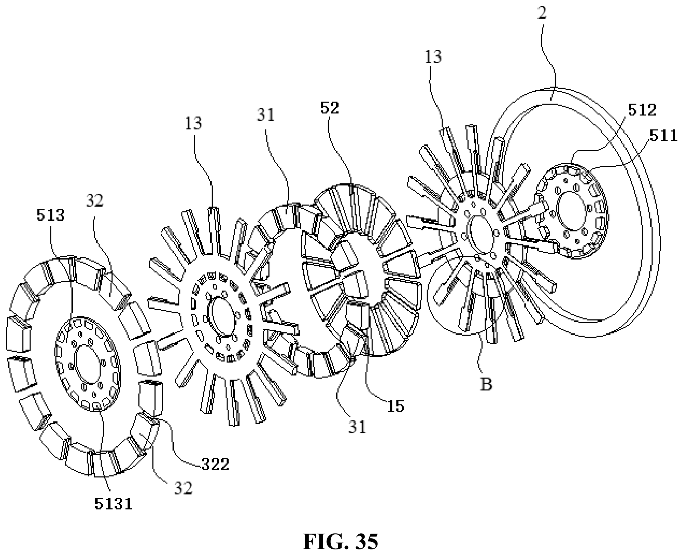

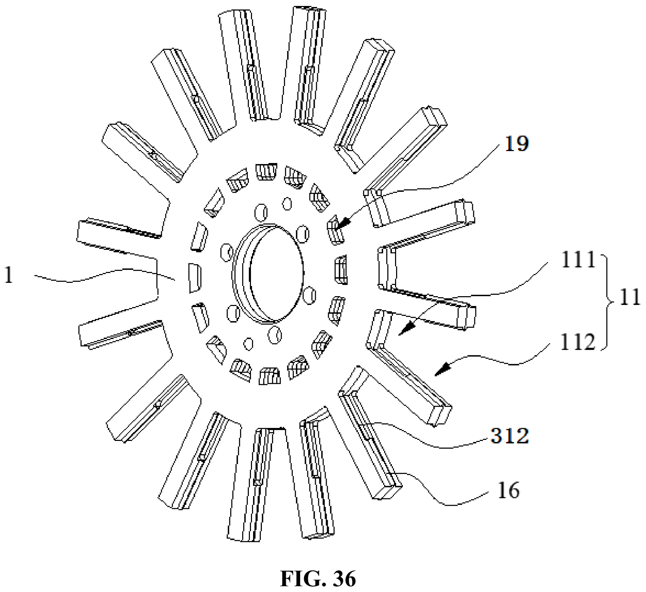

As shown in FIG. 34, the rotor of an axial flux motor includes a rotor carrier 1, multiple magnetic steel units 3, a fixing ring 2, and a constraint mechanism 5. As shown in FIGS. 35 and 36, the rotor carrier 1 has a circular contour and is circumferentially formed with multiple mounting slots 11. Optionally, the multiple mounting slots 11 are uniformly distributed around the circumference of the rotor carrier 1. A mounting slot 11 includes a first slot body 111 and a second slot body 112. The first slot body 111 and the second slot body 112 are arranged along the radial direction of the rotor carrier 1, and the first slot body 111 is disposed radially on an inner side of the second slot body 112. As shown in FIGS. 34 and 35, a magnetic steel unit 3 includes an inner-ring magnetic steel assembly 31 and an outer-ring magnetic steel assembly 32 that are arranged along the radial direction of the rotor carrier 1, the inner-ring magnetic steel assembly 31 is mounted into the first slot body 111, and the outer-ring magnetic steel assembly 32 is mounted into the second slot body 112. As shown in FIGS. 34, 35, and 37, the constraint mechanism 5 includes a connecting assembly 51 and multiple inner-ring sheaths 52. The connecting assembly 51 is connected to the rotor carrier 1. The inner-ring sheaths 52 are tensioned, first ends of the inner-ring sheaths 52 are sleeved onto the connecting assembly 51, and second ends of the inner-ring sheaths 52 are each sleeved onto at least one inner-ring magnetic steel assembly 31, to radially constrain the at least one inner-ring magnetic steel assembly 31 onto which the inner-ring sheaths 52 are each sleeved. As shown in FIG. 34, the fixing ring 2 is mounted around the rotor carrier 1 and radially limits the outer-ring magnetic steel assembly 32.

In the rotor of an axial flux motor in this embodiment, each magnetic steel unit 3 is configured to include the inner-ring magnetic steel assembly 31 and the outer-ring magnetic steel assembly 32 that are arranged radially. The constraint mechanism 5 radially constrains inner-ring magnetic steel assemblies 31 and overcomes centrifugal forces generated by the inner-ring magnetic steel assemblies 31 during rotation, and the fixing ring 2 radially constrains outer-ring magnetic steel assemblies 32 and overcomes centrifugal forces generated by the outer-ring magnetic steel assemblies 32 during rotation. That is, each magnetic steel unit 3 is radially segmented, and the constraint mechanism 5 is provided to share the centrifugal forces generated by the inner-ring magnetic steel assemblies 31, so the preceding rotor, under a given constraining force of the fixing ring 2, can constrain the outer-ring magnetic steel assemblies 32 rotating at a higher speed, and the entire rotor can effectively constrain magnetic steel units 3 rotating at a higher speed, thereby enabling the motor employing the rotor to achieve a higher rotation speed while ensuring structural robustness.

Two circumferentially adjacent magnetic steel units 3 have opposite NS polarities. Even-numbered magnetic steel units 3 are provided, and every two adjacent magnetic steel units 3 form a pole pair. In this embodiment, the inner-ring magnetic steel assembly 31 and the outer-ring magnetic steel assembly 32 are configured as fan-ring structures. The inner-ring sheaths 52 are each at least sleeved onto circumferential surfaces of the at least one inner-ring magnetic steel assembly 31.

Optionally, as shown in FIGS. 35 and 36, one of the sidewall of the first slot body 111 parallel to the radial direction and the inner-ring magnetic steel assembly 31 is formed with a first groove 312, the other one is provided with a first protrusion 15, and the first groove 312 engages with the first protrusion 15. The engagement of the first groove 312 with the first protrusion 15 allows the rotor carrier 1 to axially limit the inner-ring magnetic steel assembly 31, thereby providing a simple structure with a reliable constraint and improving the overall structural robustness of the rotor. In this embodiment, the inner-ring magnetic steel assembly 31 is provided with the first protrusion 15, and the sidewall of the first slot body 111 is formed with the first groove 312.

As shown in FIGS. 35 and 36, one of the sidewall of the second slot body 112 parallel to the radial direction and the outer-ring magnetic steel assembly 32 is formed with a second groove 322, the other one is provided with a second protrusion 16, and the second protrusion 16 engages with the second groove 322. The engagement of the second groove 322 with the second protrusion 16 allows the rotor carrier 1 to axially limit the outer-ring magnetic steel assembly 32, thereby providing the simple structure with a reliable constraint and further improving the overall structural robustness of the rotor. In this embodiment, the outer-ring magnetic steel assembly 32 is formed with the second groove 322, and the sidewall of the second slot body 112 is provided with the second protrusion 16.

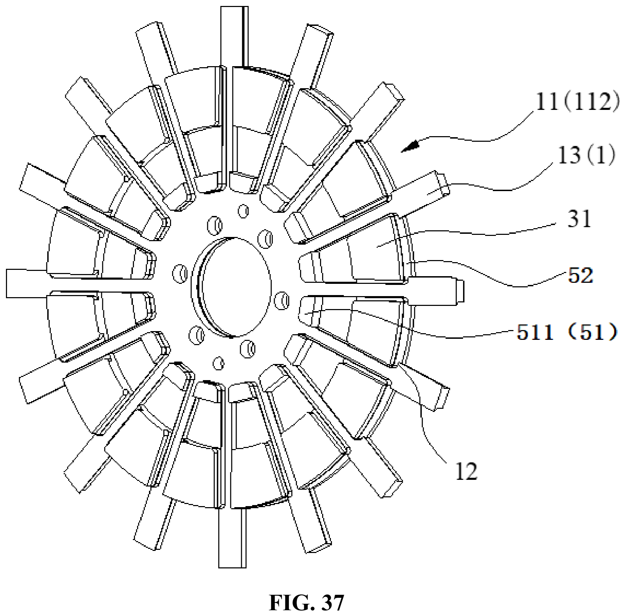

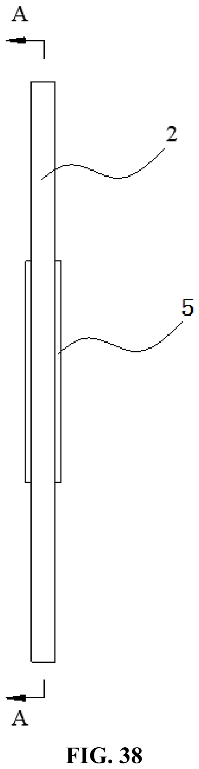

Optionally, as shown in FIGS. 37 to 39, a limiting portion 12 is formed between the first slot body 111 and the second slot body 112 and radially limits a corresponding inner-ring magnetic steel assembly 31. In other words, the rotor carrier 1 also radially constrains the inner-ring magnetic steel assemblies 31. That is, the constraint mechanism 5 and limiting portions 12 of the rotor carrier 1 together bear the centrifugal forces generated by the inner-ring magnetic steel assemblies 31 during the rotation, thereby ensuring that the inner-ring magnetic steel assemblies 31 still have robust structures at a high-speed rotation of the rotor and enabling the motor to be adapted to the high-speed applications of the axial flux motor.

In this embodiment, as shown in FIGS. 36, 37, and 39, the first slot body 111 communicates with the second slot body 112, and the end surface of the second protrusion 16 on the sidewall of the second slot body 112 facing the first slot body 111 forms the limiting portion 12. In some embodiments (not shown), the outer-ring circumferential size of the first slot body 111 is larger than the inner-ring circumferential size of the second slot body 112, thereby forming the limiting portion 12. In other embodiments, the first slot body 111 may not communicate with the second slot body 112, and the solid structure between the first slot body 111 and the second slot body 112 forms the limiting portion 12.

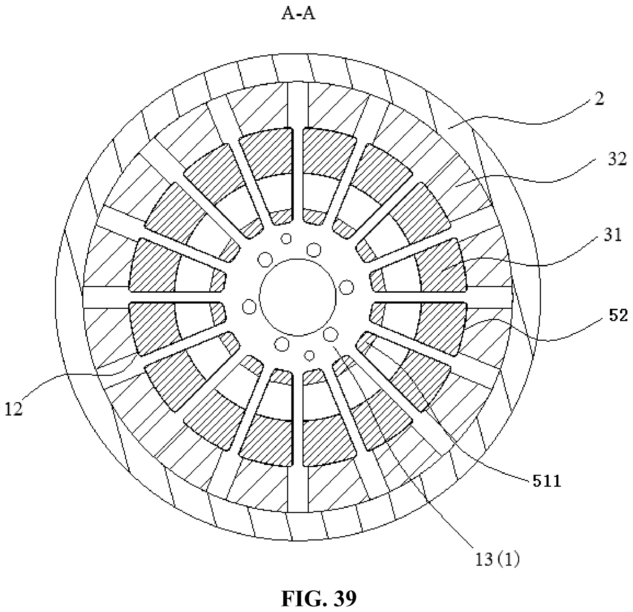

In some embodiments, as shown in FIG. 39, the constraint mechanism 5 is configured in such a manner that each inner-ring sheath 52 is sleeved onto a respective inner-ring magnetic steel assembly 31, that is, each inner-ring sheath 52 constrains the respective inner-ring magnetic steel assembly 31. In this embodiment, the number of inner-ring sheaths 52, the number of magnetic steel units 3, and the number of mounting slots 11 are all the same.

As shown in FIGS. 35, 39, and 40, the connecting assembly 51 includes multiple columns 511. In this embodiment, the number of columns 511 is the same as the number of inner-ring sheaths 52. The columns 511 penetrate through the rotor carrier 1 along the axial direction of the rotor carrier 1, and multiple first accommodation slots 131 are formed within the rotor carrier 1. Each inner-ring sheath 52 is disposed within a respective first accommodation slot 131. A first end of each inner-ring sheath 52 is sleeved onto a respective column 511, and a second end of each inner-ring sheath 52 is sleeved onto a respective inner-ring magnetic steel assembly 31. The rotor carrier 1 radially constrains the columns 511, and after being sleeved onto the column 511 and the inner-ring magnetic steel assembly 31, the inner-ring sheath 52 radially constrains the inner-ring magnetic steel assembly 31. In addition, the first accommodation slot 131 can also limit the inner-ring sheath 52, ensuring the positional stability of the inner-ring sheath 52 and thereby ensuring that the inner-ring sheath 52 reliably constrains the inner-ring magnetic steel assembly 31.

In this embodiment, as shown in FIG. 35, the connecting assembly 51 further includes a first pressing plate 512 and a second pressing plate 513 that are disposed on two sides of the rotor carrier 1, respectively. The first end of the column 511 is fixedly connected to the first pressing plate 512, and the second end of the column 511 is fixedly connected to the second pressing plate 513. During mounting of the constraint mechanism 5, the first pressing plate 512 is located on one side of the rotor carrier 1, and after penetrating through the rotor carrier 1, the columns 511 are connected to the second pressing plate 513. Optionally, the second pressing plate 513 is provided with multiple mounting holes 5131, and each column 511 can be inserted into a respective mounting hole 5131. Therefore, the first pressing plate 512 and the second pressing plate 513 can axially constrain the columns 511. The rotor generally includes a bearing pressing plate. In this embodiment, the first pressing plate 512 and the second pressing plate 513 can achieve axial position locking through the bearing pressing plate.

Optionally, as shown in FIGS. 36, 37, and 40, the rotor carrier 1 includes two carrier components 13 that are arranged axially and symmetrically, that is, the two carrier components 13 are snap-fitted to form the rotor carrier 1. Sides of the two carrier components 13 facing each other are formed with first half-slots, respectively, and two first half-slots are joined to form a first accommodation slot 131. Configuring the rotor carrier 1 to include the two carrier components 13 can not only facilitate the processing of the first accommodation slots 131, but also facilitate the mounting of the inner-ring sheaths 52 and the inner-ring magnetic steel assemblies 31.

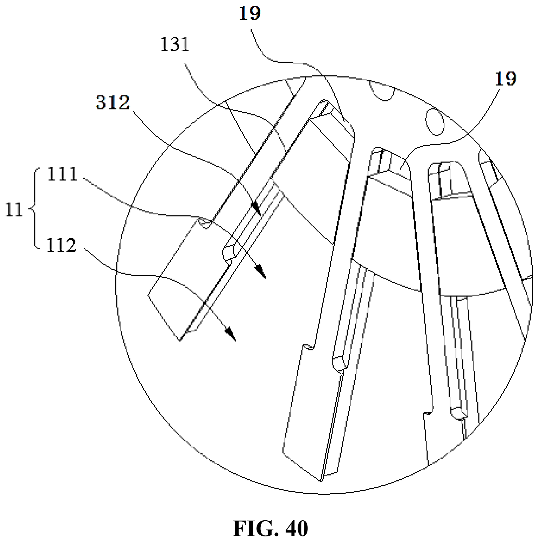

In this embodiment, as shown in FIG. 40, the first accommodation slot 131 encloses the first slot body 111 and communicates with the first slot body 111. As shown in FIG. 39, when the inner-ring magnetic steel assembly 31 is mounted into the first slot body 111, and the inner-ring sheath 52 is mounted into the first accommodation slot 131, the inner-ring sheath 52 contacts not only the circumferential surface of the inner-ring magnetic steel assembly 31 but also the surface of the inner-ring magnetic steel assembly 31 parallel to the radial direction. That is, the configuration of the first accommodation slot 131 and the first slot body 111 can increase the contact area between the inner-ring sheath 52 and the inner-ring magnetic steel assembly 31, thereby enabling the inner-ring sheath 52 to constrain the inner-ring magnetic steel assembly 31 more tightly and more reliably. As shown in FIG. 40, in this embodiment, the sidewall of the first slot body 111 is formed with the first groove 312, so the first accommodation slot 131, the first groove 312, and the first slot body 111 communicate sequentially.

The assembly steps of the rotor in this embodiment are as follows: the two carrier components 13 are processed; next, as shown in FIG. 37, multiple first pressing plates 512 are disposed on one side of a first carrier component 13, and the multiple columns 511 penetrate through multiple avoidance holes 19 on the first carrier component 13, respectively; next, as shown in FIG. 37, the multiple inner-ring sheaths 52 and the multiple inner-ring magnetic steel assemblies 31 are mounted into first half-slots and first slot bodies 111, respectively, in which case each inner-ring sheath 52 is sleeved onto the respective inner-ring magnetic steel assembly 31; next, a second carrier component 13 is snap-fitted into the first carrier component 13, and the multiple columns 511 penetrate through the avoidance holes 19 on the second carrier component 13, respectively; next, second pressing plates 513 are inserted into the multiple columns 511, respectively; next, the multiple outer-ring magnetic steel assemblies 32 are inserted into second slot bodies 112 along the radial direction of the rotor carrier 1, respectively; and the fixing ring 2 is formed around outer circumferences of the carrier components 13.

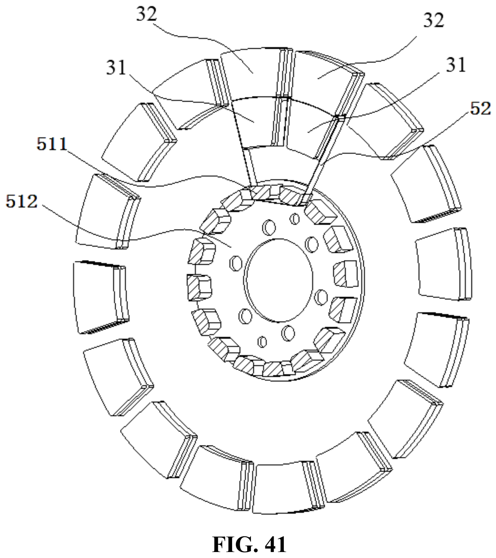

As shown in FIG. 41, in some embodiments, the constraint mechanism 5 may also be configured in such a manner that each inner-ring sheath 52 is sleeved onto two respective inner-ring magnetic steel assemblies 31, that is, each inner-ring sheath 52 constrains the two respective inner-ring magnetic steel assemblies 31. In this embodiment, the number of inner-ring sheaths 52 is half the number of inner-ring magnetic steel assemblies 31. Optionally, the number of columns 511 is the same as the number of inner-ring magnetic steel assemblies 31, and the columns 511 are in one-to-one correspondence with the inner-ring magnetic steel assemblies 31. Each inner-ring sheath 52 is sleeved onto two respective columns 511. The two columns 511 can define the extension trajectory of the inner-ring sheath 52, thereby ensuring that the inner-ring sheath 52 closely fits and contacts the two inner-ring magnetic steel assemblies 31. It is to be understood that, in some embodiments, the constraint mechanism 5 may also be configured in such a manner that each inner-ring sheath 52 is sleeved onto three or more respective inner-ring magnetic steel assemblies 31, which can be selected by those skilled in the art in combination with the total number of magnetic steel units 3.

### Embodiment thirteen

This embodiment provides a rotor of an axial flux motor and an axial flux motor. The difference between the rotor of an axial flux motor and that of embodiment twelve lies in the configuration of the constraint mechanism 5 and the configuration of the magnetic steel unit 3, as described in detail below.

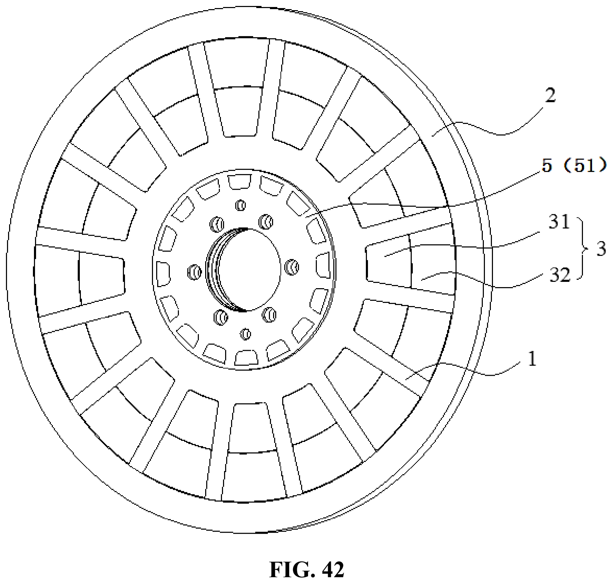

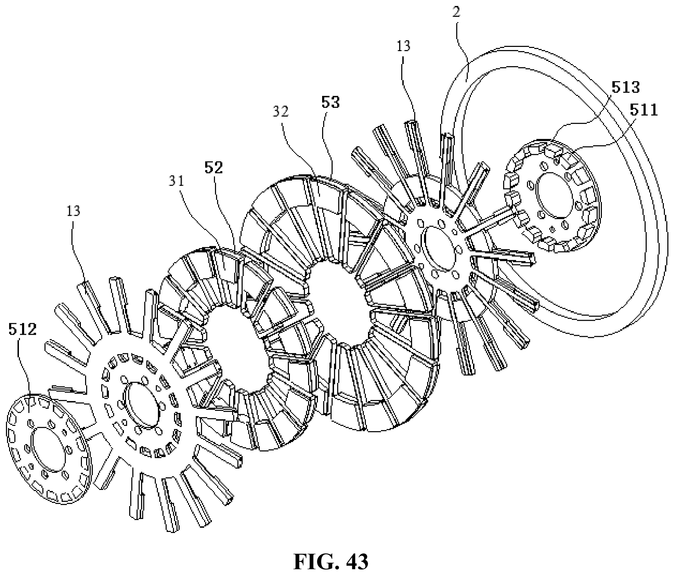

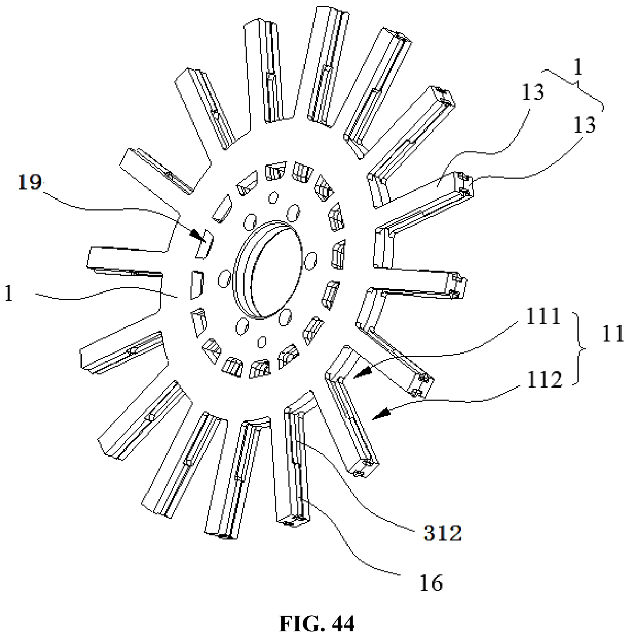

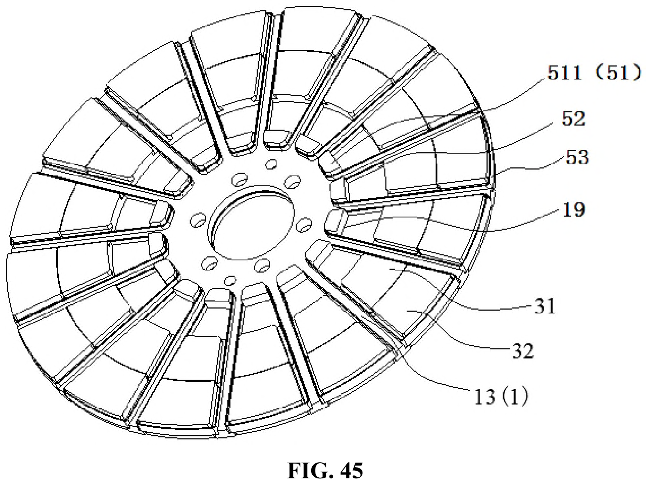

As shown in FIG. 42, in this embodiment, the rotor of an axial flux motor includes the rotor carrier 1, the multiple magnetic steel units 3, the fixing ring 2, and the constraint mechanism 5. As shown in FIGS. 43 and 44, the rotor carrier 1 has a circular contour and is circumferentially formed with the multiple mounting slots 11. Optionally, the multiple mounting slots 11 are uniformly distributed around the circumference of the rotor carrier 1. The mounting slot 11 includes the first slot body 111 and the second slot body 112. The first slot body 111 and the second slot body 112 are arranged along the radial direction of the rotor carrier 1, and the first slot body 111 is disposed radially on the inner side of the second slot body 112. As shown in FIGS. 42 and 45, the magnetic steel unit 3 includes the inner-ring magnetic steel assembly 31 and the outer-ring magnetic steel assembly 32 that are arranged along the radial direction of the rotor carrier 1, the inner-ring magnetic steel assembly 31 is mounted into the first slot body 111, and the outer-ring magnetic steel assembly 32 is mounted into the second slot body 112. As shown in FIG. 42, the fixing ring 2 is mounted around the rotor carrier 1 and radially limits the outer-ring magnetic steel assembly 32.

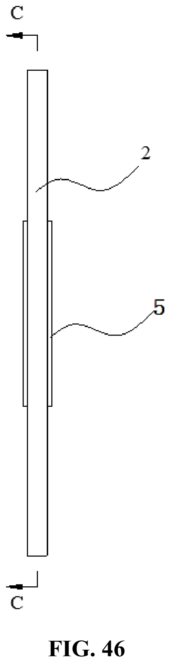

As shown in FIGS. 43 and 45 to 47, the constraint mechanism 5 includes the connecting assembly 51, the multiple inner-ring sheaths 52, and multiple outer-ring sheaths 53. The connecting assembly 51 is connected to the rotor carrier 1. The inner-ring sheaths 52 are tensioned, the first ends of the inner-ring sheaths 52 are sleeved onto the connecting assembly 51, and the second ends of the inner-ring sheaths 52 are each sleeved onto the at least one inner-ring magnetic steel assembly 31, to radially constrain the at least one inner-ring magnetic steel assembly 31 onto which the inner-ring sheaths 52 are each sleeved. The outer-ring sheaths 53 are tensioned, first ends of the outer-ring sheaths 53 are sleeved onto the connecting assembly 51, and second ends of the outer-ring sheaths 53 are each sleeved onto at least one outer-ring magnetic steel assembly 32, to radially constrain the at least one outer-ring magnetic steel assembly 32 onto which the outer-ring sheaths 53 are each sleeved.

In this embodiment, the inner-ring sheaths 52 radially constrain the inner-ring magnetic steel assemblies 31 and overcome the centrifugal forces generated by the inner-ring magnetic steel assemblies 31 during the rotation, and the fixing ring 2 and the outer-ring sheaths 53 radially constrain the outer-ring magnetic steel assemblies 32 and overcome the centrifugal forces generated by the outer-ring magnetic steel assemblies 32 during the rotation. That is, each magnetic steel unit 3 is radially segmented, and the inner-ring sheaths 52 and the outer-ring sheaths 53 are used to share the centrifugal forces generated by the segmented magnetic steels, so the preceding rotor can still effectively constrain the magnetic steel units 3 even under conditions of an increased rotation speed of the rotor and increased centrifugal forces generated by the magnetic steel units 3. Accordingly, the motor employing the rotor can achieve the higher rotation speed while ensuring the structural robustness.

The two circumferentially adjacent magnetic steel units 3 have the opposite NS polarities. The even-numbered magnetic steel units 3 are provided, and every two adjacent magnetic steel units 3 form the pole pair. In this embodiment, the inner-ring magnetic steel assembly 31 and the outer-ring magnetic steel assembly 32 are configured as the fan-ring structures. The inner-ring sheaths 52 are each at least sleeved onto circumferential surfaces of the at least one inner-ring magnetic steel assembly 31. The outer-ring sheaths 53 are each at least sleeved onto circumferential surfaces of the at least one outer-ring magnetic steel assembly 32.

In this embodiment, the structure of the connecting assembly 51 and the manner in which the connecting assembly 51 is connected to the rotor carrier 1 are the same as those in embodiment twelve and thereby are not repeated herein.

As shown in FIGS. 43 and 45, the number of magnetic steel units 3, the number of columns 511, the number of inner-ring sheaths 52, and the number of outer-ring sheaths 53 are all the same. Each inner-ring sheath 52 is sleeved onto the respective column 511 and the respective inner-ring magnetic steel assembly 31, and each outer-ring sheath 53 is sleeved onto a respective column 511 and a respective outer-ring magnetic steel assembly 32. This configuration can ensure that the constraining force applied to the multiple magnetic units 3 is more uniform. In other embodiments, if one inner-ring sheath 52 is sleeved onto two inner-ring magnetic steel assemblies 31, one outer-ring sheath 53 is sleeved onto two outer-ring magnetic steel assemblies 32, accordingly.

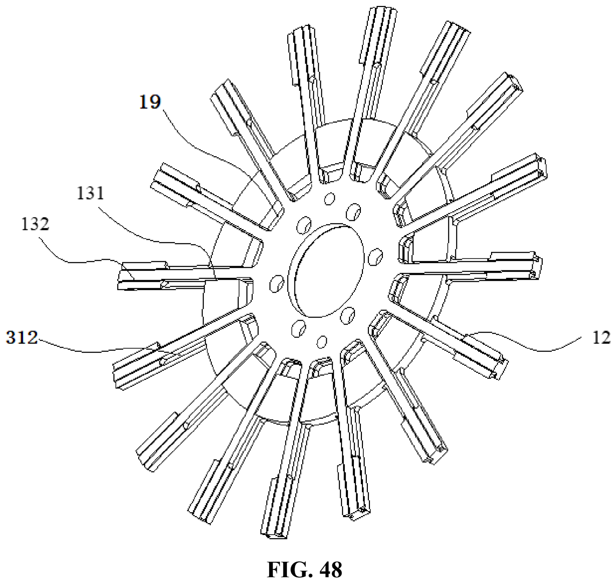

As shown in FIGS. 45 and 48, the multiple first accommodation slots 131 are formed within the rotor carrier 1, and each inner-ring sheath 52 is disposed within the respective first accommodation slot 131 and is sleeved onto the respective column 511 and the respective inner-ring magnetic steel assembly 31. Moreover, multiple second accommodation slots 132 are formed within the rotor carrier 1, and each outer-ring sheath 52 is disposed within a respective second accommodation slot 132 and is sleeved onto the respective column 511 and the respective outer-ring magnetic steel assembly 32. The configuration of the first accommodation slots 131 and the second accommodation slots 132 ensures the positional stability of the inner-ring sheaths 52 and the outer-ring sheaths 53, thereby reliably constraining the inner-ring magnetic steel assemblies 31 and the outer-ring magnetic steel assemblies 32.

Optionally, as shown in FIGS. 44 to 48, the rotor carrier 1 includes the two carrier components 13 that are arranged axially and symmetrically, that is, the two carrier components 13 are snap-fitted to form the rotor carrier 1. The sides of the two carrier components 13 facing each other are formed with first half-slots, respectively, and the two first half-slots are joined to form the first accommodation slot 131. The sides of the two carrier components 13 facing each other are formed with second half-slots, respectively, and two second half-slots are joined to form a second accommodation slot 132. Configuring the rotor carrier 1 to include the two carrier components 13 can not only facilitate the processing of the first accommodation slots 131 and the second accommodation slots 132, but also facilitate the mounting of the inner-ring sheaths 52 and the inner-ring magnetic steel assemblies 31.

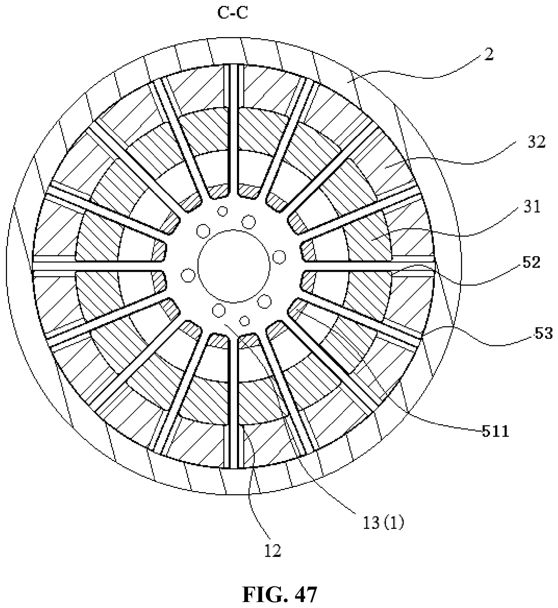

Optionally, as shown in FIGS. 45 and 47, part of the outer-ring sheath 53 is fitted outside the inner-ring sheath 52. Therefore, part of the trajectory of the first accommodation slot 131 coincides with part of the trajectory of the second accommodation slot 132. As shown in FIG. 16, the first half-slots and the second half-slots on the carrier components 13 have partially communication regions, allowing the first half-slots and the second half-slots to be processed together and thereby reducing the machining difficulty of the carrier components 13.

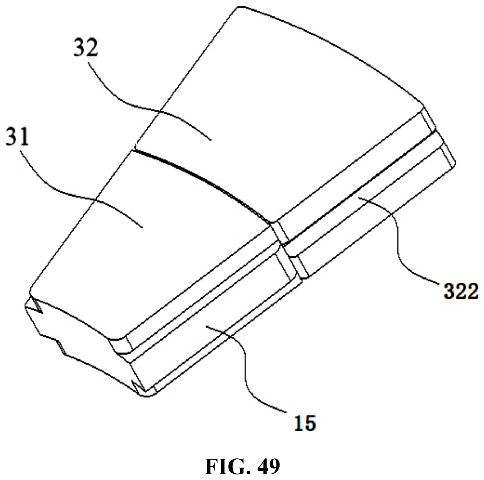

Optionally, as shown in FIGS. 44 and 49, one of the sidewall of the first slot body 111 parallel to the radial direction and the inner-ring magnetic steel assembly 31 is formed with the first groove 312, the other one is provided with the first protrusion 15, and the first groove 312 engages with the first protrusion 15. The engagement of the first groove 312 with the first protrusion 15 allows the rotor carrier 1 to axially limit the inner-ring magnetic steel assembly 31, thereby providing the simple structure with a reliable constraint and improving the overall structural robustness of the rotor. In this embodiment, the inner-ring magnetic steel assembly 31 is provided with the first protrusion 15, and the sidewall of the first slot body 111 is formed with the first groove 312.

As shown in FIGS. 47 and 49, one of the sidewall of the second slot body 112 parallel to the radial direction and the outer-ring magnetic steel assembly 32 is formed with the second groove 322, the other one is provided with the second protrusion 16, and the second protrusion 16 engages with the second groove 322. The engagement of the second groove 322 with the second protrusion 16 allows the rotor carrier 1 to axially limit the outer-ring magnetic steel assembly 32, thereby providing the simple structure with a reliable constraint and further improving the overall structural robustness of the rotor. In this embodiment, the outer-ring magnetic steel assembly 32 is formed with the second groove 322, and the sidewall of the second slot body 112 is provided with the second protrusion 16.

Optionally, as shown in FIGS. 47 and 48, the limiting portion 12 is formed between the first slot body 111 and the second slot body 112 and radially limits the corresponding inner-ring magnetic steel assembly 31. The rotor carrier 1 also radially constrains the inner-ring magnetic steel assembly 31. In this embodiment, the inner-ring sheaths 52 and the rotor carrier 1 together bear the centrifugal forces generated by the inner-ring magnetic steel assemblies 31, and the outer-ring sheaths 53 and the fixing ring 2 together bear the centrifugal forces generated by the outer-ring magnetic steel assemblies 32. This greatly enhances the constraining force applied to the magnetic steel units 3 so that the magnetic steel units 3 can still be reliably constrained during the high-speed rotation of the rotor, thereby enabling the motor employing the rotor to be adapted to the high-speed applications of the axial flux motor.

In this embodiment, as shown in FIGS. 44 and 48, the first slot body 111 communicates with the second slot body 112, and the end surface of the second protrusion 16 on the sidewall of the second slot body 112 facing the first slot body 111 forms the limiting portion 12. In some embodiments (not shown), the outer-ring circumferential size of the first slot body 111 is larger than the inner-ring circumferential size of the second slot body 112, thereby forming the limiting portion 12. In other embodiments, the first slot body 111 may not communicate with the second slot body 112, and the solid structure between the first slot body 111 and the second slot body 112 forms the limiting portion 12.

The assembly steps of the rotor in this embodiment are as follows: the two carrier components 13 are processed; next, as shown in FIG. 45, the multiple first pressing plates 512 are disposed on the side of the first carrier component 13, and the multiple columns 511 penetrate through the multiple avoidance holes 19 on the first carrier component 13, respectively; next, as shown in FIG. 45, the multiple inner-ring sheaths 52, the multiple inner-ring magnetic steel assemblies 31, the multiple outer-ring sheaths 53, and the multiple outer-ring magnetic steel assemblies 32 are mounted into the first half-slots, the first slot bodies 111, second half-slots, and second slot bodies 112 respectively, in which case each inner-ring sheath 52 is sleeved onto the respective inner-ring magnetic steel assembly 31, and each outer-ring sheath 53 is sleeved onto the respective outer-ring magnetic steel assembly 32; next, the second carrier component 13 is snap-fitted into the first carrier component 13, and the multiple columns 511 penetrate through the avoidance holes 19 on the second carrier component 13, respectively; next, the second pressing plates 513 are inserted into the multiple columns 511, respectively; and the fixing ring 2 is formed around the outer circumferences of the carrier components 13.

In the rotor of an axial flux motor in the present application, each magnetic steel unit is configured to include the inner-ring magnetic steel assembly and the outer-ring magnetic steel assembly that are arranged radially. The constraint mechanism radially constrains the inner-ring magnetic steel assemblies and overcomes the centrifugal forces generated by the inner-ring magnetic steel assemblies during the rotation, and the fixing ring radially constrains the outer-ring magnetic steel assemblies and overcomes the centrifugal forces generated by the outer-ring magnetic steel assemblies during the rotation. That is, each magnetic steel unit is segmented radially, and the constraint mechanism is additionally provided to bear the centrifugal forces generated by the inner-ring magnetic steel assemblies. Therefore, under the condition that the constraining force of the fixing ring is given, the rotor can constrain the outer-ring magnetic steel assemblies rotating at the higher speed, and the entire rotor can effectively constrain the magnetic steel units rotating at the higher speed, so as to be adapted to the high-speed applications of the axial flux motor.

## Claims

1. A rotor of an axial flux motor, comprising a rotor carrier (1), a fixing ring (2), and a plurality of magnetic steel units (3),
wherein the rotor carrier (1) is circumferentially formed with a plurality of mounting slots (11), each magnetic steel unit (3) of the plurality of magnetic steel units (3) is mounted into a respective mounting slot (11) of the plurality of mounting slots (11), and the fixing ring (2) is mounted around the rotor carrier (1) and is configured to radially limit the plurality of magnetic steel units (3); and
wherein along a radial direction of the rotor carrier (1), a magnetic steel unit (3) comprises an inner-ring magnetic steel assembly (31) and an outer-ring magnetic steel assembly (32), the rotor carrier (1) is provided with a plurality of limiting portions (12), and each limiting portion (12) of the plurality of limiting portions (12) is configured to radially limit a respective inner-ring magnetic steel assembly (31).

2. The rotor of an axial flux motor according to claim 1, wherein a mounting slot (11) of the plurality of mounting slots (11) comprises a first slot body (111) and a second slot body (112) that are arranged radially from inside to outside, the rotor carrier (1) is configured to form a limiting portion (12) between the first slot body (111) and the second slot body (112), and at least part of an outer circumferential surface of the inner-ring magnetic steel assembly (31) is configured to abut against the limiting portion (12).

3. The rotor of an axial flux motor according to claim 2, wherein the rotor carrier (1) comprises two carrier components (13) arranged axially, and the two carrier components (13) are symmetrically arranged.

4. The rotor of an axial flux motor according to claim 3, wherein the two carrier components (13) are bonded together.

5. The rotor of an axial flux motor according to any one of claims 2 to 4, wherein the first slot body (111) communicates with the second slot body (112), and an outer-ring circumferential size of the first slot body (111) is larger than an inner-ring circumferential size of the second slot body (112) to form the limiting portion (12).

6. The rotor of an axial flux motor according to any one of claims 2 to 4, wherein the first slot body (111) does not communicate with the second slot body (112), and each limiting portion (12) extends along a same circumferential trajectory as a respective inner-ring magnetic steel assembly (31).

7. The rotor of an axial flux motor according to any one of claims 2 to 4, wherein the rotor carrier (1) is formed with a reinforcing rib (14), and the reinforcing rib (14) is mounted around outer circumferences of a plurality of outer-ring magnetic steel assemblies (32).

8. The rotor of an axial flux motor according to any one of claims 2 to 4, wherein at least one of the following conditions is satisfied:
one of a sidewall of the first slot body (111) parallel to the radial direction and a sidewall of the inner-ring magnetic steel assembly (31) is provided with a first protrusion (15), and the other one of the sidewall of the first slot body (111) parallel to the radial direction and the sidewall of the inner-ring magnetic steel assembly (31) is formed with a first groove (312), wherein the first protrusion (15) engages with the first groove (312); or
one of a sidewall of the second slot body (112) parallel to the radial direction and a sidewall of the outer-ring magnetic steel assembly (32) is provided with a second protrusion (16), and the other one of the sidewall of the second slot body (112) parallel to the radial direction and the sidewall of the outer-ring magnetic steel assembly (32) is formed with a second groove (322), wherein the second protrusion (16) engages with the second groove (322).

9. The rotor of an axial flux motor according to any one of claims 2 to 4, wherein at least one of the following conditions is satisfied:
the inner-ring magnetic steel assembly (31) is axially divided into two inner sub-segments (311); or
the outer-ring magnetic steel assembly (32) is axially divided into two outer sub-segments (321).

10. A rotor of an axial flux motor, comprising:
a rotor carrier (1), wherein the rotor carrier (1) is circumferentially formed with a plurality of mounting slots (11);
a magnetic-flux conducting disc assembly, wherein the magnetic-flux conducting disc assembly is made of a magnetic-flux conducting material and connected to the rotor carrier (1) and comprises a plurality of filling portions, and each filling portion of the plurality of filling portions is configured to fill part of a space of a respective mounting slot (11) of the plurality of mounting slots (11); and
a plurality of magnetic steel units (3), wherein the plurality of magnetic steel units (3) are mounted into the plurality of mounting slots (11), respectively, and each magnetic steel unit (3) of the plurality of magnetic steel units (3) is configured to fill a remaining space of the respective mounting slot (11).

11. The rotor of an axial flux motor according to claim 10, wherein along a radial direction of the rotor carrier (1), the mounting slot (11) comprises a first slot body (111) and a second slot body (112), a magnetic steel unit (3) of the plurality of magnetic steel units (3) comprises an inner-ring magnetic steel assembly (31) accommodated in the first slot body (111) and an outer-ring magnetic steel assembly (32) accommodated in the second slot body (112), the rotor carrier (1) is provided with a plurality of limiting portions (12), and each limiting portion (12) of the plurality of limiting portions (12) is configured to radially limit a respective inner-ring magnetic steel assembly (31).

12. The rotor of an axial flux motor according to claim 11, wherein the magnetic-flux conducting disc assembly comprises at least one of an inner-ring magnetic-flux conducting disc (41) or an outer-ring magnetic-flux conducting disc (42),
wherein the inner-ring magnetic-flux conducting disc (41) comprises a plurality of inner-ring filling portions (411), each inner-ring filling portion (411) of the plurality of inner-ring filling portions (411) is configured to fill part of the first slot body (111), the inner-ring magnetic steel assembly (31) is configured to fill a remaining space of the first slot body (111), and the outer-ring magnetic steel assembly (32) is mounted into the second slot body (112);
wherein the outer-ring magnetic-flux conducting disc (42) comprises a plurality of outer-ring filling portions (421), each outer-ring filling portion (421) of the plurality of outer-ring filling portions (421) is configured to fill part of the second slot body (112), the outer-ring magnetic steel assembly (32) is configured to fill a remaining space of the second slot body (112), and the inner-ring magnetic steel assembly (31) is mounted into the first slot body (111).

13. The rotor of an axial flux motor according to claim 12, wherein at least one of the following conditions is satisfied:
the inner-ring magnetic-flux conducting disc (41) further comprises a plurality of inner-ring connecting portions (412) connected to the rotor carrier (1), and an inner-ring connecting portion (412) of the plurality of inner-ring connecting portions (412) is configured to connect two adjacent inner-ring filling portions (411) of the plurality of inner-ring filling portions (411); or
two adjacent inner-ring filling portions (411) of the plurality of inner-ring filling portions (411) are located at two ends of the rotor carrier (1) along an axial direction, respectively, to enable two adjacent inner-ring magnetic steel assemblies (31) to be located at the two ends of the rotor carrier (1) along the axial direction, respectively.

14. The rotor of an axial flux motor according to claim 12, wherein one of a sidewall of the second slot body (112) parallel to the radial direction and a sidewall of the outer-ring magnetic steel assembly (32) is provided with a third protrusion (17), and the other one of the sidewall of the second slot body (112) parallel to the radial direction and the sidewall of the outer-ring magnetic steel assembly (32) is formed with a first groove (321), wherein the third protrusion (17) engages with the first groove (321).

15. The rotor of an axial flux motor according to claim 12, wherein at least one of the following conditions is satisfied:
the outer-ring magnetic-flux conducting disc (42) further comprises a plurality of outer-ring connecting portions (422) connected to the rotor carrier (1), and an outer-ring connecting portion (422) of the plurality of outer-ring connecting portions (422) is configured to connect two adjacent outer-ring filling portions (421) of the plurality of outer-ring filling portions (421); or
two adjacent outer-ring filling portions (421) of the plurality of outer-ring filling portions (421) are located at two ends of the rotor carrier (1) along an axial direction, respectively, to enable two adjacent outer-ring magnetic steel assemblies (32) to be located at the two ends of the rotor carrier (1) along the axial direction, respectively.

16. The rotor of an axial flux motor according to claim 12, wherein one of a sidewall of the first slot body (111) parallel to the radial direction and a sidewall of the inner-ring magnetic steel assembly (31) is provided with a fourth protrusion (18), and the other one of the sidewall of the first slot body (111) parallel to the radial direction and the sidewall of the inner-ring magnetic steel assembly (31) is formed with a second groove (312), wherein the fourth protrusion (18) engages with the second groove (312).

17. The rotor of an axial flux motor according to claim 16, wherein the inner-ring magnetic steel assembly (31) comprises two inner sub-segments (311) arranged along an axial direction of the rotor carrier (1).

18. An axial flux motor, comprising a stator and the rotor of an axial flux motor according to any one of claims 10 to 17.

19. A method for manufacturing a rotor of an axial flux motor, configured to manufacture the rotor of an axial flux motor according to claim 13 and comprising:
processing the inner-ring magnetic-flux conducting disc (41);
using the inner-ring magnetic-flux conducting disc (41) as an insert and integrally molding the inner-ring magnetic-flux conducting disc (41) together with the rotor carrier (1);
mounting a plurality of unmagnetized inner-ring magnetic steel assemblies (31) into a plurality of first slot bodies (111), respectively;
overall magnetizing the plurality of inner-ring magnetic steel assemblies (31); and
mounting a plurality of magnetized outer-ring magnetic steel assemblies (32) into a plurality of second slot bodies (112), respectively.

20. A method for manufacturing a rotor of an axial flux motor, configured to manufacture the rotor of an axial flux motor according to claim 15 and comprising:
processing the outer-ring magnetic-flux conducting disc (42);
using the outer-ring magnetic-flux conducting disc (42) as an insert and integrally molding the outer-ring magnetic-flux conducting disc (42) together with the rotor carrier (1);
mounting a plurality of unmagnetized outer-ring magnetic steel assemblies (32) into a plurality of second slot bodies (112), respectively;
overall magnetizing the plurality of outer-ring magnetic steel assemblies (32); and
mounting a plurality of inner-ring magnetic steel assemblies (31) into a plurality of first slot bodies (111), respectively.

21. The method for manufacturing a rotor of an axial flux motor according to claim 20, before overall magnetizing the plurality of outer-ring magnetic steel assemblies (32), further comprising:
winding a tightening band around an outer circumference of the rotor carrier (1) to mold a fixing ring (2) that radially blocks the plurality of magnetic steel units (3).

22. A rotor of an axial flux motor, comprising a rotor carrier (1), a plurality of magnetic steel units (3), and a fixing ring (2),
wherein the plurality of magnetic steel units (3) are circumferentially spaced apart and supported on the rotor carrier (1), and the fixing ring (2) is mounted around an outer circumference of the rotor carrier (1) and is configured to radially constrain the plurality of magnetic steel units (3); and
wherein a magnetic steel unit (3) of the plurality of magnetic steel units (3) comprises an inner-ring magnetic steel assembly (31) and an outer-ring magnetic steel assembly (32) that are arranged radially, the inner-ring magnetic steel assembly (31) is axially divided into at least one inner sub-segment (311), and the outer-ring magnetic steel assembly (32) is axially divided into at least one outer sub-segment (321); in a same magnetic steel unit (3) of the plurality of magnetic steel units (3), at least one of the at least one inner sub-segment (311) and the at least one outer sub-segment (321) is a magnetic steel, and the others of the at least one inner sub-segment (311) and the at least one outer sub-segment (321) are magnetic flux conductors.

23. The rotor of an axial flux motor according to claim 22, wherein at least one of the following conditions is satisfied:
the inner-ring magnetic steel assembly (31) is axially divided into at least two inner sub-segments (311); one of two circumferentially adjacent inner sub-segments (311) of the at least two inner sub-segments (311) is a magnetic steel, and the other one of the two circumferentially adjacent inner sub-segments (311) is a magnetic flux conductor; or
the outer-ring magnetic steel assembly (32) is axially divided into at least two outer sub-segments (321); one of two circumferentially adjacent outer sub-segments (321) of the at least two outer sub-segments (321) is a magnetic steel, and the other one of the two circumferentially adjacent outer sub-segments (321) is a magnetic flux conductor.

24. The rotor of an axial flux motor according to claim 23, wherein at least one of the following conditions is satisfied:
on a same side of the rotor carrier (1), one of two circumferentially adjacent inner sub-segments (311) of the at least two inner sub-segments (311) is a magnetic steel, and the other one of the two circumferentially adjacent inner sub-segments (311) is a magnetic flux conductor; or
on a same side of the rotor carrier (1), one of two circumferentially adjacent outer sub-segments (321) of the at least two outer sub-segments (321) is a magnetic steel, and the other one of the two circumferentially adjacent outer sub-segments (321) is a magnetic flux conductor.

25. The rotor of an axial flux motor according to claim 23, wherein the fixing ring (2) is formed by curing a plurality of layers of carbon fiber wound around the rotor carrier (1) before the at least two outer sub-segments (321) and the at least two inner sub-segments (311) made of magnetic steel are magnetized.

26. The rotor of an axial flux motor according to claim 22, wherein in the same magnetic steel unit (3), a volume ratio of the magnetic steel relative to the magnetic steel unit (3) is 50%.

27. The rotor of an axial flux motor according to any one of claims 22 to 26, wherein the rotor carrier (1) is formed with a plurality of mounting slots (11) arranged circumferentially, each magnetic steel unit (3) is mounted into a respective mounting slot (11) of the plurality of mounting slots (11), the rotor carrier (1) is provided with a plurality of limiting portions (12), and each limiting portion (12) of the plurality of limiting portions (12) is configured to radially limit a respective inner-ring magnetic steel assembly (31).

28. The rotor of an axial flux motor according to claim 27, wherein the mounting slot (11) comprises a first slot body (111) and a second slot body (112) that are arranged radially from inside to outside, the rotor carrier (1) is configured to form the limiting portion (12) between the first slot body (111) and the second slot body (112), and at least part of an outer circumferential surface of the inner-ring magnetic steel assembly (31) is configured to abut against the limiting portion (12).

29. A method for manufacturing a rotor of an axial flux motor, configured to manufacture the rotor of an axial flux motor according to any one of claims 22 to 28 and comprising:
configuring each inner-ring magnetic steel assembly (31) of a plurality of inner-ring magnetic steel assemblies (31) to comprise two inner sub-segments (311), wherein one of the two inner sub-segments (311) is a magnetic steel, and the other one of the two inner sub-segments (311) is a magnetic flux conductor, and configuring each outer-ring magnetic steel assembly (32) of a plurality of outer-ring magnetic steel assemblies (32) to comprise two outer sub-segments (321), wherein one of the two outer sub-segments (321) is a magnetic steel, and the other one of the two outer sub-segments (321) is a magnetic flux conductor;
mounting the plurality of outer-ring magnetic steel assemblies (32) onto the rotor carrier (1), and ensuring that on a same side of the rotor carrier (1), one of two circumferentially adjacent outer sub-segments (321) is a magnetic steel, and the other one of the two circumferentially adjacent outer sub-segments (321) is a magnetic flux conductor;
mounting the plurality of inner-ring magnetic steel assemblies (31) onto the rotor carrier (1), and ensuring that on the same side of the rotor carrier (1), one of two circumferentially adjacent inner sub-segments (311) is a magnetic steel, and the other one of the two circumferentially adjacent inner sub-segments (321) is a magnetic flux conductor;
overall magnetizing magnetic steels in the plurality of inner-ring magnetic steel assemblies (31) and/or magnetic steels in the plurality of outer-ring magnetic steel assemblies (32); and
forming the fixing ring (2) around the outer circumference of the rotor carrier (1) to radially constrain the plurality of outer-ring magnetic steel assemblies (32).

30. The method for manufacturing a rotor of an axial flux motor according to claim 29, before overall magnetizing the magnetic steels in the plurality of outer-ring magnetic steel assemblies (32) and the magnetic steels in the plurality of inner-ring magnetic steel assemblies (31), further comprising:
winding carbon fiber around the outer circumference of the rotor carrier (1) to mold the fixing ring (2).

31. An axial flux motor, comprising a stator and the rotor according to any one of claims 22 to 27.

32. A rotor of an axial flux motor, comprising:
a rotor carrier (1), wherein the rotor carrier (1) is circumferentially formed with a plurality of mounting slots (11), and a mounting slot (11) of the plurality of mounting slots (11) comprises a first slot body (111) and a second slot body (112);
a plurality of magnetic steel units (3), wherein along a radial direction of the rotor carrier (1), a magnetic steel unit (3) of the plurality of magnetic steel units (3) comprises an inner-ring magnetic steel assembly (31) mounted into the first slot body (111) and an outer-ring magnetic steel assembly (32) mounted into the second slot body (112);
a fixing ring (2), wherein the fixing ring (2) is mounted around the rotor carrier (1) and is configured to radially limit the outer-ring magnetic steel assembly (32); and
a constraint mechanism (5), wherein the constraint mechanism (5) comprises a connecting assembly (51) and a plurality of inner-ring sheaths (52); the connecting assembly (51) is connected to the rotor carrier (1); the plurality of inner-ring sheaths (52) are tensioned, first ends of the plurality of inner-ring sheaths (52) are sleeved onto the connecting assembly (51), and second ends of the plurality of inner-ring sheaths (52) are each sleeved onto at least one inner-ring magnetic steel assembly (31), to radially constrain the at least one inner-ring magnetic steel assembly (31).

33. The rotor of an axial flux motor according to claim 32, wherein the connecting assembly (51) comprises a plurality of columns (511), and the plurality of columns (511) penetrate through the rotor carrier (1) along an axial direction of the rotor carrier (1); and
a plurality of first accommodation slots (131) are formed within the rotor carrier (1), and each inner-ring sheath (52) of the plurality of inner-ring sheaths (52) is provided within a respective first accommodation slot (131) of the plurality of first accommodation slots (131) and is sleeved onto a respective column (511) of the plurality of columns (511).

34. The rotor of an axial flux motor according to claim 33, wherein the rotor carrier (1) comprises two carrier components (13) arranged axially and symmetrically, sides of the two carrier components (13) facing each other are formed with first half-slots, respectively, and two first half-slots are joined to form a first accommodation slot (131).

35. The rotor of an axial flux motor according to claim 33, wherein the first accommodation slot (131) encloses the first slot body (111) and communicates with the first slot body (111).

36. The rotor of an axial flux motor according to claim 33, wherein the connecting assembly (51) further comprises a first pressing plate (512) and a second pressing plate (513) that are disposed on two sides of the rotor carrier (1), respectively, and the plurality of columns (511) are disposed on the first pressing plate (512) and are detachably connected to the second pressing plate (513).

37. The rotor of an axial flux motor according to any one of claims 32 to 36, wherein the constraint mechanism (5) further comprises a plurality of outer-ring sheaths (53), the plurality of outer-ring sheaths (53) are tensioned, first ends of the plurality of outer-ring sheaths (53) are sleeved onto the connecting assembly (51), and second ends of the plurality of outer-ring sheaths (53) are each sleeved onto at least one outer-ring magnetic steel assembly (32), to radially constrain the at least one outer-ring magnetic steel assembly (32).

38. The rotor of an axial flux motor according to claim 37, wherein part of an outer-ring sheath (53) of the plurality of outer-ring sheaths (53) is fitted outside an inner-ring sheath (52) of the plurality of inner-ring sheaths (52).

39. The rotor of an axial flux motor according to claim 37, wherein the connecting assembly (51) comprises the plurality of columns (511), and the plurality of columns (511) penetrate through the rotor carrier (1) along the axial direction of the rotor carrier (1); and
a plurality of second accommodation slots (132) are formed within the rotor carrier (1), and each outer-ring sheath (53) of the plurality of outer-ring sheaths (53) is provided within a respective second accommodation slot (132) of the plurality of second accommodation slots (132) and is sleeved onto a respective column (511) of the plurality of columns (511).

40. The rotor of an axial flux motor according to any one of claims 32 to 36, wherein a limiting portion (12) is formed between the first slot body (111) and the second slot body (112) and is configured to radially limit a respective inner-ring magnetic steel assembly (31).

41. The rotor of an axial flux motor according to any one of claims 32 to 36, wherein at least one of the following conditions is satisfied:
one of a sidewall of the first slot body (111) parallel to the radial direction and the inner-ring magnetic steel assembly (31) is formed with a first groove (312), and the other one of the sidewall of the first slot body (111) parallel to the radial direction and the inner-ring magnetic steel assembly (31) is provided with a first protrusion (15), wherein the first groove (312) engages with the first protrusion (15); or
one of a sidewall of the second slot body (112) parallel to the radial direction and the outer-ring magnetic steel assembly (32) is formed with a second groove (322), and the other one of the sidewall of the second slot body (112) parallel to the radial direction and the outer-ring magnetic steel assembly (32) is provided with a second protrusion (16), wherein the second protrusion (16) engages with the second groove (322).

42. An axial flux motor, comprising a stator and the rotor according to any one of claims 32 to 41.
